# EUROPEAN PATENT APPLICATION

(11) **EP 4 844 686 A1**
(43) Date of publication of application: **25.11.2026**
(21) Application number: 25797145.7
(22) Date of filing: 17.03.2025
(51) Int. Cl.: G06T 11/00, A63F 13/60

(54) **APPLICATION TEXTURE RENDERING METHOD AND APPARATUS, AND ELECTRONIC DEVICE, COMPUTER-READABLE STORAGE MEDIUM AND COMPUTER PROGRAM PRODUCT**

(30) Priority: 28.04.2024 CN 202410517067
(71) Applicant: Tencent Technology (Shenzhen) Company Limited, Shenzhen, Guangdong 518057 (CN)
(72) Inventor: LIU, Xinyu, Shenzhen, Guangdong 518057 (CN); XIAO, Hai, Shenzhen, Guangdong 518057 (CN)
(74) Representative: Nederlandsch Octrooibureau
(86) International application number: PCT/CN2025/083002
(87) International publication number: WO 2025/227968

(57) **Abstract**

Provided in the present application are an application texture rendering method and apparatus, and an electronic device, a computer-readable storage medium and a computer program product. The method comprises: acquiring a target application texture resource and placeholder data of a target application, and sending the placeholder data to a second electronic device; according to a plurality of candidate compression formats, respectively compressing the target application texture resource into a plurality of candidate compressed texture resources; receiving a resource request sent by the second electronic device, wherein the resource request is sent by the second electronic device after acquiring the placeholder data, and the resource request is used for requesting a target compressed texture resource, the target compressed texture resource being obtained by using a target compression format to compress the target application texture resource; and if the target compression format is one of the plurality of candidate compression formats, acquiring the target compressed texture resource from among the plurality of candidate compressed texture resources, and sending the target compressed texture resource to the second electronic device.

## Description

### RELATED APPLICATION

Embodiments of this application are filed based on Chinese Patent Application No. 202410517067.6 filed on April 28, 2024, and claim priority to the Chinese Patent Application, which is incorporated herein by reference in its entirety.

### TECHNICAL FIELD

This application relates to the field of image rendering, and in particular, to an application texture rendering method and apparatus, an electronic device, a computer-readable storage medium, and a computer program product.

### BACKGROUND

Currently, in applications such as electronic games, as a user progresses through different stages of using an application, texture rendering needs to be performed based on the textures of various display objects at each stage, so as to obtain application pictures to be displayed. Textures reflect the attributes of the arrangement of surface structures of an object that exhibit slowly varying or periodic variations. As vulgarly understood, a texture is a pattern of a displayed object, e.g., a pattern on a game character's skin or a sword.

Different terminals have different texture compression formats. If the texture compression format set for an application at the time of its release differs from the texture compression format supported by a terminal, the compressed textures of the application may not be rendered properly, leading to usage problems. If compressed textures in various compression formats are all transmitted to the terminal in advance, the terminal's storage space will be occupied excessively.

### SUMMARY

Embodiments of this application provide an application texture rendering method and apparatus, an electronic device, a computer-readable storage medium, and a computer program product, which can improve the universality of application texture rendering on terminals supporting different compression formats and reduce the occupation of the terminal's storage space.

According to an aspect of the embodiments of this application, provided is an application texture rendering method, performed by a first electronic device and including:
acquiring a first application texture resource and placeholder data of a first application, and transmitting the placeholder data to a second electronic device;
compressing the first application texture resource into a plurality of candidate compressed texture resources based on a plurality of candidate compression formats;
receiving a resource request transmitted by the second electronic device, the resource request being transmitted by the second electronic device after acquiring the placeholder data and being configured for requesting a first compressed texture resource, and the first compressed texture resource corresponding to a compressing result of the first application texture resource using a first compression format; and
acquiring the first compressed texture resource from the plurality of candidate compressed texture resources if the first compression format belongs to the plurality of candidate compression formats, in order to transmit the first compressed texture resource to the second electronic device;
where the first compressed texture resource is configured for the second electronic device to render the first application.

According to an aspect of the embodiments of this application, provided is an application texture rendering apparatus, including:
a first transmission unit configured to acquire a first application texture resource and placeholder data of a first application, and transmit the placeholder data to a second electronic device;
a compression unit configured to compress the first application texture resource into a plurality of candidate compressed texture resources based on a plurality of candidate compression formats; and
a second transmission unit configured to: receive a resource request transmitted by the second electronic device, the resource request being transmitted by the second electronic device after acquiring the placeholder data and being configured for requesting a first compressed texture resource, and the first compressed texture resource corresponding to a compressing result of the first application texture resource using a first compression format; and acquire the first compressed texture resource from the plurality of candidate compressed texture resources if the first compression format belongs to the plurality of candidate compression formats, in order to transmit the first compressed texture resource to the second electronic device; where the first compressed texture resource is configured for the second electronic device to render the first application.

According to an aspect of the embodiments of this application, provided is an application texture rendering method, performed by a second electronic device and including:
determining a first compression format supported by the second electronic device in response to acquiring placeholder data of a first application transmitted from a first electronic device;
transmitting a resource request to the first electronic device, the resource request being configured for requesting a first compressed texture resource, and the first compressed texture resource corresponding to a compressing result of a first application texture resource using the first compression format; and
receiving the first compressed texture resource from the first electronic device, and rendering the first application based on the first compressed texture resource;
where when transmitting the placeholder data of the first application, the first electronic device further compresses the acquired first application texture resource into a plurality of candidate compressed texture resources based on a plurality of candidate compression formats; the plurality of candidate compression formats include the first compression format; and the plurality of candidate compressed texture resources include the first compressed texture resource.

According to an aspect of the embodiments of this application, provided is an application texture rendering apparatus, including:
a determination unit configured to determine a first compression format supported by a second electronic device in response to acquiring placeholder data of a first application transmitted from a first electronic device;
a third transmission unit configured to transmit a resource request to the first electronic device, the resource request being configured for requesting a first compressed texture resource, and the first compressed texture resource corresponding to a compressing result of a first application texture resource using the first compression format; and
a first receiving unit configured to receive the first compressed texture resource from the first electronic device, and render the first application based on the first compressed texture resource; where when transmitting the placeholder data of the first application, the first electronic device further compresses the acquired first application texture resource into a plurality of candidate compressed texture resources based on a plurality of candidate compression formats; the plurality of candidate compression formats include the first compression format; and the plurality of candidate compressed texture resources include the first compressed texture resource.

According to an aspect of the embodiments of this application, provided is an electronic device, including:
a memory configured to store computer-executable instructions or a computer program; and
a processor configured to execute the computer-executable instructions or the computer program stored in the memory to implement the application texture rendering method as described above.

According to an aspect of the embodiments of this application, provided is a computer program product, including computer-executable instructions or a computer program stored therein that, when executed by a processor, cause(s) the application texture rendering method as described above to be implemented.

According to an aspect of the embodiments of this application, provided is a computer program product, including computer-executable instructions or a computer program stored therein that, when executed by a processor, cause(s) a computer device to perform the application texture rendering method as described above.

In the embodiments of this application, during initial configuration on the first electronic device side, the target application texture resource and the placeholder data of the target application are acquired, and the target application texture resource is compressed into a plurality of candidate compressed texture resources according to a plurality of candidate compression formats for storage. Then, the placeholder data is transmitted to a user's second electronic device. Thus, the second electronic device does not receive the compressed texture resource in any compression format. When the second electronic device actually performs application rendering, the second electronic device can acquire the placeholder data, and then the target compression format supported by the second electronic device can be determined. The resource request is transmitted to the first electronic device, thereby requesting, based on the resource request, the target compressed texture resource obtained by compressing the target application texture resource in the target compression format. Since the first electronic device pre-stores the candidate compressed texture resources in various candidate compression formats, upon receiving the resource request, it can acquire, based on the resource request, the target compressed texture resource from the candidate compressed texture resources and transmit the target compressed texture resource to the second electronic device, so that the second electronic device renders the target application using the target compressed texture resource. In this process, regardless of which compression format is supported by the second electronic device, since no specific compressed texture resource is received, after acquiring the placeholder data, the second electronic device obtains the target compressed texture resource by requesting from the first electronic device the target compressed texture resource in the target compression format, thereby performing rendering. In this way, the universality of application texture rendering on terminals supporting different compression formats can be improved, thereby improving the rendering efficiency of application textures. Moreover, since the placeholder data is much smaller than the compressed texture resources, the occupation of the terminal's storage space can be greatly reduced, thereby reducing the waste of space resources.

Other features and advantages of the embodiments of this application will be set forth in the following specification, and partially become apparent from the specification or may be learned from the embodiments of this application. The objectives and other advantages of the embodiments of this application can be achieved and obtained via the structures specifically pointed out in the specification, claims, and accompanying drawings.

### BRIEF DESCRIPTION OF THE DRAWINGS

The accompanying drawings are configured to provide further understanding of technical solutions of the embodiments of this application, constitute a part of the specification, are utilized to explain the technical solutions of this application along with the embodiments of this application, and do not constitute a limitation to the technical solutions of the embodiments of this application.
FIG. 1 is a diagram of a system architecture to which an application texture rendering method according to an embodiment of this application is applied.
FIG. 2 is a schematic diagram of a scenario in which terminals are changed according to an embodiment of this application.
FIG. 3 is a schematic flowchart of an application texture rendering method according to an embodiment of this application.
FIG. 4 is a flowchart of an application texture rendering method according to an embodiment of this application.
FIG. 5 is a schematic diagram of an initial resource package and an updated resource package according to an embodiment of this application.
FIG. 6 is a schematic flowchart of storing a plurality of candidate compressed texture resources according to an embodiment of this application.
FIG. 7 is a schematic diagram of a compression process according to an embodiment of this application.
FIG. 8 is a schematic flowchart of an application texture rendering method according to an embodiment of this application.
FIG. 9 is a schematic diagram of a resource request according to an embodiment of this application.
FIG. 10 is a schematic flowchart of transmitting a resource request according to an embodiment of this application.
FIG. 11 is a schematic flowchart of an application texture rendering method according to an embodiment of this application.
FIG. 12 is a schematic flowchart of determining a target compressed texture resource according to an embodiment of this application.
FIG. 13 is a schematic flowchart of an application texture rendering method according to an embodiment of this application.
FIG. 14 is a schematic flowchart of an application texture rendering method according to an embodiment of this application.
FIG. 15 is a schematic structural diagram of an application texture rendering apparatus 1500 applied to a first electronic device according to an embodiment of this application.
FIG. 16 is a schematic structural diagram of an application texture rendering apparatus 1600 applied to a second electronic device according to an embodiment of this application.
FIG. 17 is a structural block diagram of part of a second electronic device to which an application texture rendering method is applied according to an embodiment of this application.
FIG. 18 is a structural block diagram of part of a first electronic device to which an application texture rendering method is applied according to an embodiment of this application.

### DETAILED DESCRIPTION

To make the objectives, technical solutions, and advantages of the embodiments of this application clearer, the following describes the embodiments of this application in further detail with reference to the accompanying drawings and the embodiments. The specific embodiments described here are merely intended to explain the embodiments of this application, rather than to limit this application.

Before the embodiments of this application are described in further detail, descriptions are made on terms involved in the embodiments of this application, and the terms involved in the embodiments of this application are applicable to the following explanations.

Application: It generally refers to a software program or system configured to execute a specific task or provide a specific function. There may be various types of applications, including a mobile application, a desktop application, a Web application, and the like. The Web application includes a WebGL game.

WebGL Game: It is a game developed by using Web Graphics Library (WebGL) technology. It refers to a game work that runs in canvas elements in compliance with the HTML5 standard and is rendered by using a technology based on WebGL. In rendering a WebGL game, texture resources are often required.

Texture Resource: It is alternatively referred to as a texture mapping resource, which is a bitmap resource that can be applied to wrap around the surface of a three-dimensional (3D) model or a sprite. Common mapping resources are mainly in PNG and JPEG formats. To reduce the storage size of texture resources, texture compression may be performed.

Texture Compression: It is an image compression technique specifically designed for storing texture mapping resources in a computer graphics rendering system, where the compression algorithm is optimized for storage size and random access. Common texture compression format names include Ericsson Texture Compression (ETC or Ericsson Texture Compression 2, ETC2), Adaptive Scalable Texture Compression (ASTC), PowerVR Texture Compression (PVRTC), DXT1, DXT5, etc.

Unity Mini-Game: It specifically refers to a game work developed using the Unity platform and run on mini-game platforms. The Unity platform may be configured to develop various types of games and can output them in the WebGL format, thereby obtaining WebGL games.

AssetBundle Package (AB Package): It refers to a game resource archive file provided by the Unity platform, which can store non-code resources required during game running (e.g., models, textures, prefabs, scenes, and media files).

Initial Package Resource: It specifically refers to the resource file stored in the initial scene when exporting WebGL game resources from the Unity platform, with the suffix "unityweb" by default. This resource file is loaded with priority when the Unity mini-game starts, and the initial package resource contains initial scene resource content and accompanying AB package resources.

Unity Resource Package: It is a collective term for AB packages and initial package resources.

In the related art, the Unity platform already provides game developers with texture resource compression processing capabilities. Generally, Unity mini-games are published as stand-alone releases for different terminals. To be specific, separate game clients are exported for iOS, Android, and Windows. By differently configuring texture resource formats supported by various terminals, when exporting Unity resource packages from game resources, the texture resources are converted according to the format types supported by the terminals, and the compressed texture resources already in the corresponding texture compression formats are written into the Unity resource packages. Thus, during game running, the compressed texture resources can be directly utilized to achieve efficient texture rendering.

Currently, there is a lack of technology that enables an application (such as the above-mentioned Unity mini-game) to be rendered properly on various terminals supporting different compression formats. If compressed textures in various compression formats are placed into a resource package in advance, the terminal's storage space will be occupied excessively.

The embodiments of this application can improve the universality of application texture rendering on terminals supporting different compression formats, thereby improving the rendering efficiency of application textures. Meanwhile, this reduces the occupation of the terminal's storage space and reduces the waste of space resources.

### Description of System Architecture and Scenario to Which the Embodiments of This Application Are Applied

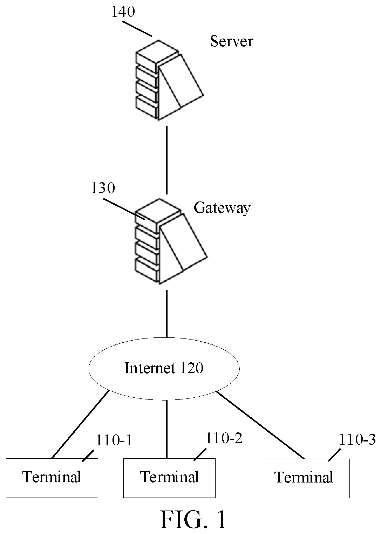

FIG. 1 is a diagram of a system architecture to which an application texture rendering method according to an embodiment of this application is applied. The system architecture includes terminals 110-1, 110-2, and 110-3, the Internet 120, a gateway 130, and a server 140.

The terminals 110-1, 110-2, and 110-3 are devices used by objects to render target applications (such as the above-mentioned WebGL game and Unity mini-games). Such devices include a plurality of forms such as a desktop computer, a laptop computer, a personal digital assistant (PDA), a mobile phone, an in-vehicle terminal, a home theater terminal, and a dedicated terminal. In addition, the object terminal may be a single device or a collection of a plurality of devices. For example, the plurality of devices are connected through a local area network, and share a display device to work together to form a terminal. The terminals 110-1, 110-2, and 110-3 may communicate with the Internet 120 in a wired or wireless manner to exchange data.

The gateway 130 is also referred to as an inter-network connector or a protocol converter. The gateway 130 implements network interconnection on a transport layer and is a computer system or device providing a conversion function. The gateway 130 is a translator between two systems that use different communication protocols, data formats or languages, or even completely different architectures. Meanwhile, the gateway 130 may alternatively provide filtering and security functions. Messages transmitted by the terminals 110-1, 110-2, and 110-3 to the server 140 need to be transmitted to the corresponding server 140 via the gateway 130. Messages transmitted by the server 140 to the terminals 110-1, 110-2, and 110-3 also need to be transmitted to the corresponding terminals 110-1, 110-2, and 110-3 via the gateway 130.

The server 140 refers to a computer system that can provide some services to the terminals 110-1, 110-2, and 110-3 (for example, provide application containers of target applications to the terminals 110-1, 110-2, and 110-3, or provide compressed texture resources in various formats to the terminals). Compared with the terminals 110-1, 110-2, and 110-3, the server 140 has higher requirements in terms of stability, security, performance, etc. The server 140 may be a high-performance computer, a cluster of a plurality of high-performance computers, a part (for example, a virtual machine) spared from a high-performance computer, a combination of a part (for example, a virtual machine) spared from a plurality of high-performance computers, or the like in a network platform. The server 140 may communicate with the Internet 120 in a wired or wireless manner to exchange data.

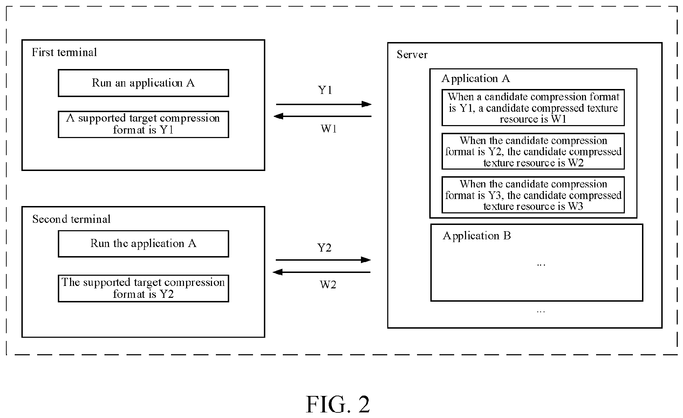

The embodiments of this application may be applied to a plurality of scenarios. For example, FIG. 2 is a schematic diagram of a scenario in which terminals are changed according to an embodiment of this application.

Based on FIG. 2, after a user has used a terminal (referred to as a first terminal) for a long period of time, the user may need to replace it with a new terminal (referred to as a second terminal). When replacing the terminal, it is often necessary to import data of various applications on the first terminal (e.g., application containers, user registration information, application running data, etc.) to the second terminal, so as to retain the usage records of such applications. Since the first terminal and the second terminal differ in terminal type, the supported texture compression formats also differ. Consequently, when running an application on the second terminal, the compressed texture resources cannot be parsed, affecting the rendering of texture resources for the application. Therefore, a need arises for a solution that, when the user replaces the first terminal with the second terminal, does not affect the texture resource rendering of the application.

As shown in FIG. 2, the compressed texture resources of different applications in various texture compression formats are stored on the server. For example, an application A includes a candidate compressed texture resource W1 in a candidate compression format Y1, a candidate compressed texture resource W2 in a candidate compression format Y2, and a candidate compressed texture resource W3 in a candidate compression format Y3. An application B, similar to the application A, also includes compressed texture resources in various texture compression formats, which will not be described redundantly here. On the first terminal, an application container does not contain specific texture resources but instead contains placeholder data. When the user uses the first terminal to run the application A, since the target compression format supported by the first terminal is Y1, upon identifying the placeholder data, the first terminal may request from the server the candidate compressed texture resource corresponding to the target compression format Y1. Thus, the first terminal uses the candidate compressed texture resource Y1 to render the target application. After the user replaces the first terminal with the second terminal, the second terminal has the same resource package as the first terminal. When the user uses the second terminal to run the application A, since the target compression format supported by the second terminal is Y2, upon identifying the placeholder data in the resource package, the second terminal may request from the server the candidate compressed texture resource corresponding to the target compression format Y2. Thus, the second terminal uses the candidate compressed texture resource Y2 to render the target application. It thus can be seen that when the user replaces the first terminal with the second terminal, there is no need to re-download the application container for the application corresponding to the second terminal or re-download the resource package (if the second terminal re-downloads the resource package, the usage records generated on the first terminal may be lost), nor does rendering fail due to a difference between the compression format supported by the second terminal and that supported by the first terminal. When performing application rendering, the second terminal may adaptively download the required compressed texture resources, thereby avoiding loss of application usage records while being able to render texture resources normally.

Thus, since the server pre-stores candidate compressed texture resources in various candidate compression formats, the target compressed texture resource can be acquired therefrom and transmitted to the terminal, so that the terminal uses the target compressed texture resource to render the target application. In this process, regardless of the compression format supported by the terminal, because the resource package does not contain specific compressed texture resources but instead contains the placeholder data, the terminal can obtain the target compressed texture resource by requesting from the server the target compressed texture resource in the target compression format, thereby performing rendering. This can improve the universality of application texture rendering on terminals supporting different compression formats, thereby improving the rendering efficiency of application textures. Moreover, since the placeholder data is much smaller than the compressed texture resources, the occupation of the terminal's storage space can be greatly reduced, thereby reducing the waste of space resources.

### General Description of Embodiments of This Application

According to an embodiment of this application, there is provided an application texture rendering method.

The application texture rendering method refers to a method for rendering texture resources required for running an application. The application texture rendering method provided in this embodiment of this application is performed on a terminal and/or a server.

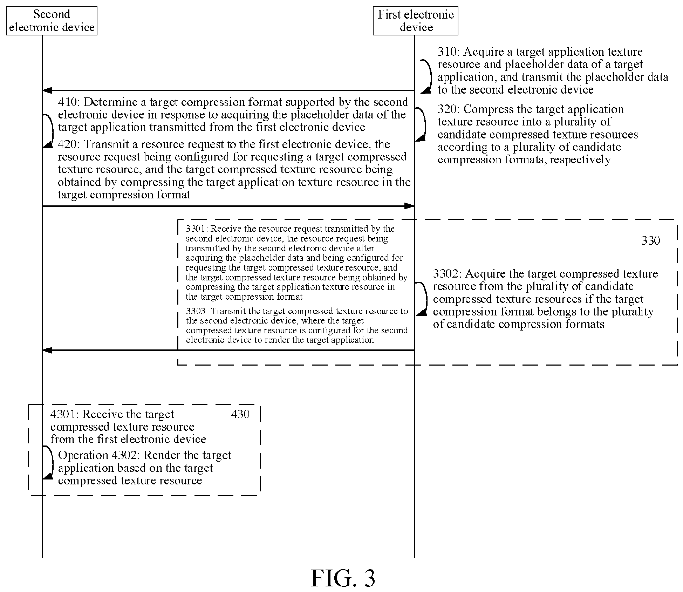

FIG. 3 is a schematic flowchart of an application texture rendering method according to an embodiment of this application. Based on FIG. 3, the application texture rendering method (performed by a first electronic device, such as a server) provided in this embodiment of this application includes:
Operation 310: Acquire a target application texture resource (also called "a first application texture resource") and placeholder data of a target application (also called "a first application"), and transmit the placeholder data to a second electronic device;
Operation 320: Compress the target application texture resource into a plurality of candidate compressed texture resources according to a plurality of candidate compression formats, respectively; and
Operation 330: Receive a resource request transmitted by the second electronic device, the resource request being transmitted by the second electronic device after acquiring the placeholder data and being configured for requesting a target compressed texture resource (also called "a first compressed texture resource"), and the target compressed texture resource being obtained by compressing the target application texture resource in a target compression format (also called "a first compression format"); and acquire the target compressed texture resource from the plurality of candidate compressed texture resources if the target compression format belongs to the plurality of candidate compression formats, and transmit the target compressed texture resource to the second electronic device; where the target compressed texture resource is configured for the second electronic device to render the target application.

The advantage of the embodiment of operations 310 to 330 lies in compressing the target application texture resources into a plurality of candidate compressed texture resources for storage, and transmitting the placeholder data to the second electronic device. In this way, the second electronic device (e.g., a terminal) does not receive any compressed texture resource in any compression format. When the second electronic device transmits the request for the target compressed texture resource in the target compression format to the first electronic device, since the first electronic device pre-stores the candidate compressed texture resources in various candidate compression formats, the target compressed texture resource can be acquired therefrom and transmitted to the second electronic device, so that the second electronic device uses the target compressed texture resource to render the target application. Thus, this embodiment of this application can improve the universality of application texture rendering on terminals supporting different compression formats, thereby improving the rendering efficiency of application textures. Moreover, since the placeholder data is much smaller than the compressed texture resources, the occupation of the terminal's storage space can be greatly reduced, thereby reducing the waste of space resources.

The following describes in detail operations 310 to 330, operations included between operations 310 and 330, and further operations included after operation 330.

### Detailed Description of Operation 310

In some embodiments, in operation 310, the process of acquiring the target application texture resource of the target application includes: acquiring an initial resource package of the target application, the initial resource package including an initial compressed texture resource in an initial compression format for the target application; and decompressing the initial compressed texture resource to obtain the target application texture resource.

The target application refers to an application capable of executing a specific task or providing a specific function. For example, referring to the above, the application includes a Web application, and the Web application includes a WebGL game. Therefore, the target application may refer to a WebGL game. The initial compressed texture resource refers to a target application texture resource that has been compressed. The target application texture resource refers to a texture resource configured for rendering the application. For instance, when running the target application on a terminal, it is necessary to decompress the initial compressed texture resource into the target application texture resource, and then use the target application texture resource to render the target application.

When designing an application, a developer needs to design an application container for the application. The application container is a container configured to store data related to the running of the application. The application container includes an application package and an initial resource package. The application package is configured to control the running process of the application. The initial resource package is configured to provide a resource for rendering during the running of the application. The initial resource package may include the target application texture resource. To reduce the storage size of the initial resource package, a compression algorithm corresponding to the initial compression format may be employed to compress the target application texture resource to obtain the initial compressed texture resource, such that the initial resource package includes the initial compressed texture resource in the initial compression format for the target application. In some embodiments, when running the application on a terminal, corresponding operations may be performed by using the application package, and the initial resource package may be called for rendering.

In some embodiments, the acquisition of the initial resource package of the target application includes, but is not limited to, the following manners:
(1) The first electronic device, in response to a developer designing and releasing the target application on the Unity platform, acquires an initial application container for the target application from the Unity platform, where the initial application container includes the initial resource package.
(2) The first electronic device, in response to a user requesting to transmit the target application from the first terminal to the second terminal, acquires the initial application container for the target application from the first terminal, where the initial application container includes the initial resource package.

By applying the above embodiment, the target application texture resource is obtained by decompressing the initial resource package of the target application. In this way, the target application texture resource is packaged and compressed to reduce the size of the application installation package, optimize memory usage, and facilitate resource management.

In some embodiments, as described above, the process of acquiring the target application texture resource of the target application includes: acquiring the initial resource package of the target application, the initial resource package including the initial compressed texture resource in the initial compression format for the target application; and decompressing the initial compressed texture resource to obtain the target application texture resource.

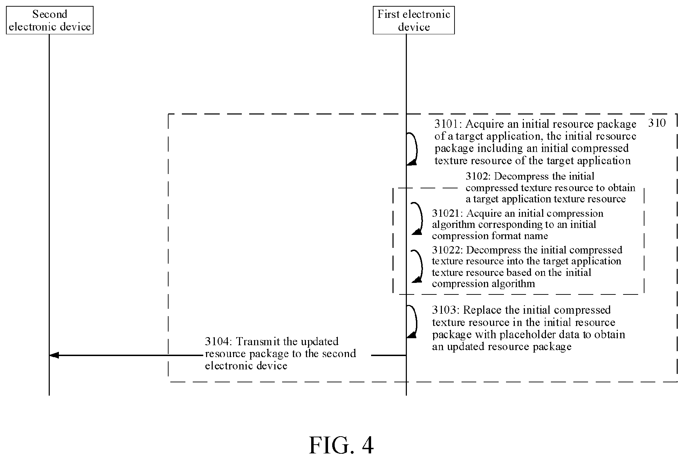

On this basis, FIG. 4 is a flowchart of an application texture rendering method according to an embodiment of this application. Based on FIG. 4, operation 310 may be divided into the following operations. Operation 3101: Acquire the initial resource package of the target application, the initial resource package including the initial compressed texture resource of the target application. Operation 3102: Decompress the initial compressed texture resource to obtain the target application texture resource. Operation 3103: Replace the initial compressed texture resource in the initial resource package with the placeholder data to obtain an updated resource package. Operation 3104: Transmit the updated resource package to the second electronic device.

In operation 3102 of some embodiments, the first electronic device may decompress the initial compressed texture resource based on a compression algorithm corresponding to a compression format name to obtain the target application texture resource. In addition to the initial compressed texture resource, the initial resource package further includes an initial compression format name, and the first electronic device stores compression algorithms corresponding to various texture compression format names.

For example, with continued reference to FIG. 4, based on FIG. 4, operation 3102 includes: Operation 31021: Acquire an initial compression algorithm corresponding to the initial compression format name; and Operation 31022: Decompress the initial compressed texture resource into the target application texture resource based on the initial compression algorithm.

The first electronic device stores a mapping table of format names to compression algorithms. Operation 31021 includes: looking up the mapping table of format names to compression algorithms according to the initial compression format name to obtain the initial compression algorithm. The following is an example of the mapping table of format names to compression algorithms.

**Table 1**

| Initial Compression Format Name | Initial Compression Algorithm |
|---|---|
| ETC | ETC algorithm |
| ASTC | ASTC algorithm |
| PVRTC | PVRTC algorithm |
| DXT | DXT algorithm |

Referring to Table 1, if the initial compression format name is ETC, the server uses the ETC algorithm as the initial compression algorithm. If the initial compression format name is ASTC, the server uses the ASTC algorithm as the initial compression algorithm. If the initial compression format name is PVRTC, the server uses the PVRTC algorithm as the initial compression algorithm. If the initial compression format name is DXT, the server uses the DXT algorithm as the initial compression algorithm.

In actual implementation, in addition to table lookup, other approaches may be employed to obtain the initial compression algorithm. This is not specifically limited in this embodiment.

In operation 31022 of some embodiments, the initial compressed texture resource may be decompressed based on a decompression function or decompression tool corresponding to the initial compression algorithm to obtain the target application texture resource. Specifically, when decompressing the initial compressed texture resource, the decompression process depends on the compression algorithm and format used. For example, the following are some common texture compression formats and decompression methods: (1) Ericsson Texture Compression (ETC): ETC is a commonly used texture compression format, often used for mobile terminals. Decompressing ETC texture resources can be performed using corresponding functions provided by graphics APIs (e.g., OpenGL ES). (2) Adaptive Scalable Texture Compression (ASTC): ASTC is an advanced texture compression format developed by ARM, supporting a plurality of compression ratios and bit depths. Decompressing ASTC texture resources typically requires decoding using corresponding functions provided by graphics APIs or libraries that support the ASTC format. (3) PowerVR Texture Compression (PVRTC): PVRTC is a texture compression format developed by Imagination Technologies, commonly used for iOS devices. Decompressing PVRTC texture resources requires decoding using tools such as PVRTexTool.

By applying the above embodiment, the initial compression algorithm is first determined based on the initial compression format name, and then decompression is performed based on the initial compression algorithm, thereby improving decompression efficiency.

In operation 3103 of some embodiments, the first electronic device replaces the initial compressed texture resource in the initial resource package with the placeholder data to obtain the updated resource package. The placeholder data is typically temporary data configured for replacing real data in a data package without affecting the parsing of the data package. In the embodiments of this application, the placeholder data is utilized to replace the initial compressed texture resource, thereby obtaining the updated resource package, and the parsing of the updated resource package is not affected even without the initial compressed texture resource. The placeholder data may be a texture resource name.

Different texture resource names may be categorized according to their uses and characteristics. For example, the following are some common texture resource names: (1) Diffuse Map: It is configured to describe the color and lighting information of the surface of an object. (2) Normal Map: It is configured to simulate concave-convex details of the surface of an object, enhancing lighting effects and improving visual realism. (3) Specular Map: It is configured to control the intensity and position of specular reflection on the surface of an object, affecting the glossiness of a material. (4) Emission Map: It is configured to describe the emissive parts of the surface of an object, enabling self-emissive effects. (5) Roughness Map: It is configured to describe the degree of roughness of the surface of an object, affecting the scattering and reflection effects of light. (6) Metallic Map: It is configured to describe the metallic properties of the surface of an object, affecting the reflection manner and color of light. (7) Ambient Occlusion Map: It is configured to describe the shadow and occlusion information of the surface of an object, enhancing the realism and three-dimensional effect of a scene. (8) Height Map: It is configured to describe the height information of the surface of an object, often utilized to create bumpy terrain effects.

The acquisition of the placeholder data includes, but is not limited to, the following manners: (1) If the initial resource package further includes the name of the initial compressed texture resource, the name of the initial compressed texture resource may be obtained from the initial resource package to obtain a texture resource name, and the texture resource name is determined as the placeholder data. (2) If the initial resource package does not include the name of the initial compressed texture resource, name identification may be performed based on the descriptive functionalities of the initial compressed texture resource to obtain a texture resource name, and the texture resource name is determined as the placeholder data. The descriptive functionalities refer to the above-described functionalities of describing the color and lighting information, concave-convex details, intensity and position of specular reflection, emissive parts, roughness, metallic properties, shadow and occlusion information, height information, and the like of the surface of an object.

In actual implementation, after determining the placeholder data, the process of replacing the initial compressed texture resource in the initial resource package with the placeholder data to obtain the updated resource package may include: 1, backing up the initial compressed texture resource; 2, copying the placeholder data into the initial resource package to overwrite the initial compressed texture resource; 3, updating paths or link relationships between the remaining resources of the initial resource package and the placeholder data; and 4, testing the placeholder data in the initial resource package; and if it can be correctly loaded and displayed, deleting the backup and using the initial resource package as the updated resource package.

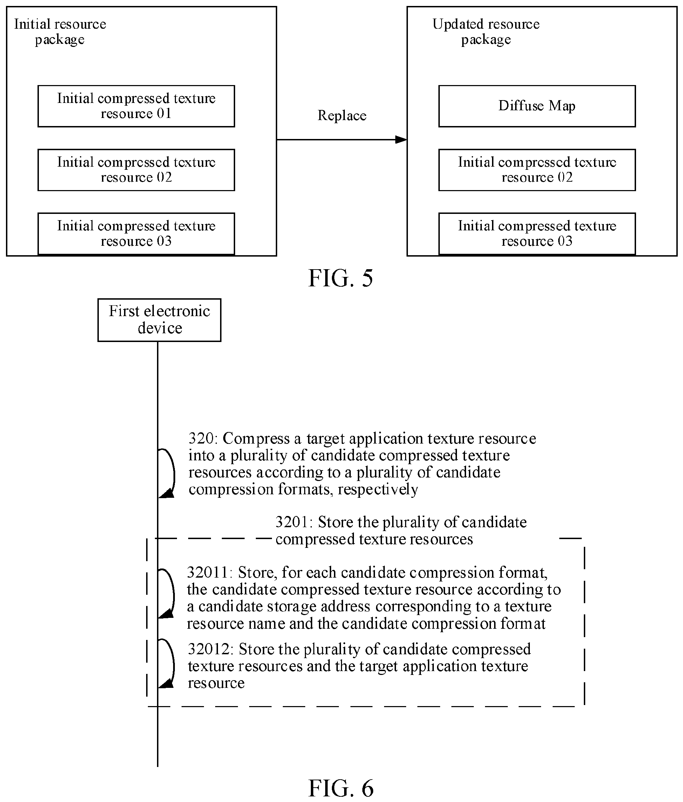

In some embodiments, FIG. 5 is a schematic diagram of an initial resource package and an updated resource package according to an embodiment of this application. Based on FIG. 5, the initial resource package stores a plurality of initial compressed texture resources, including an initial compressed texture resource 01, an initial compressed texture resource 02, an initial compressed texture resource 03, etc. Assuming that the texture resource name of the initial compressed texture resource 01 is Diffuse Map, the placeholder data is Diffuse Map. The "initial compressed texture resource 01" is replaced in the initial resource package with "Diffuse Map" to obtain an updated resource package. The updated resource package stores Diffuse Map, the initial compressed texture resource 02, and the initial compressed texture resource 03. Other initial compressed texture resources, such as the initial compressed texture resource 02 and the initial compressed texture resource 03, may alternatively be replaced. The process is similar to the replacement of the initial compressed texture resource 01 and will not be described redundantly here.

In operation 3204 of some embodiments, the first electronic device transmits the updated resource package to the second electronic device. If a terminal has not downloaded the target application, the first electronic device transmits the application container of the target application to the terminal in response to a download request for the target application transmitted by the second electronic device, where the application container includes an application code and the updated resource package. If the second electronic device has downloaded the target application, the first electronic device transmits the updated resource package to the second electronic device in response to a request for acquiring a resource package of the target application transmitted by the second electronic device.

In an embodiment, before performing operation 3204, operation 32041 may be performed: changing a texture resource compression format field of the updated resource package to an anchor compression format to obtain a new updated resource package (also called "a first updated resource package"). Then, operation 3204 is performed. In this case, operation 3204 is implemented through operation 32042, i.e., transmitting the new updated resource package to the second electronic device. The texture resource compression format field is a field indicating the compression format of a texture resource.

Before the first electronic device performs data replacement, the initial resource package includes the initial compressed texture resource, and the texture resource compression format field in the initial resource package is the compression format (e.g., ETC format) of the initial compressed texture resource. After the first electronic device performs data replacement, the updated resource package no longer includes the initial compressed texture resource but instead includes placeholder data, and the texture resource compression format field is updated to the anchor compression format. The anchor compression format is a specific compression format indicating that the terminal is to request texture resources from the first electronic device. Since the second electronic device may not support the anchor compression format, if the second electronic device identifies that the texture resource compression format field is the anchor compression format, it may add a mandatory constraint to a texture processing script, where the mandatory constraint indicates support for the anchor compression format. Here, the specific process of the second electronic device adding the mandatory constraint will be described below and will not be elaborated here.

If some second electronic devices do not apply the mandatory constraint, after discovering that the updated resource package contains no texture resource but only the placeholder data, they may be unable to request texture resources from the first electronic device, resulting in a failure in texture resource rendering.

By applying the above embodiment, the texture resource compression format field is changed to the anchor compression format, thereby enabling the second electronic device to apply the mandatory constraint. In this way, it can support the functionality of the second electronic device for requesting a texture resource from the first electronic device when identifying the anchor compression format, so that even if the updated resource package contains no specific texture resource, the second electronic device can still obtain the texture resource from the first electronic device.

### Detailed Description of Operation 320

With reference to FIG. 3, operation 320: Compress the target application texture resource into a plurality of candidate compressed texture resources according to a plurality of candidate compression formats, respectively.

A candidate compression format is a data compression format configured for reducing a file size. One candidate compression format generally corresponds to one compression algorithm. Referring to the above, candidate compression formats may include ETC, ASTC, PVRTC, DXT, and the like.

In operation 320 of some embodiments, a compression algorithm corresponding to a candidate compression format may be called to compress the target application texture resource, thereby obtaining the candidate compressed texture resource corresponding to the candidate compression format. For example, if the candidate compression format is ETC, the ETC algorithm may be called to compress the target application texture resource to obtain the candidate compressed texture resource in the ETC format. In other words, the same application texture resource is compressed using different candidate compression formats, to obtain different candidate compressed texture resources. That is, the candidate compression formats are in one-to-one correspondence with the candidate compressed texture resources.

In actual implementation, after performing operation 320, operation 3201 may be performed: storing the plurality of candidate compressed texture resources.

In operation 3201 of some embodiments, a serial number may be assigned to each candidate compressed texture resource, and the candidate compressed texture resources may be stored according to candidate storage addresses corresponding to the serial numbers and the candidate compression formats. For example, the serial number is assigned to each candidate compressed texture resource in the order of compression time. However, the serial numbers cannot reflect information related to the candidate compressed texture resources (e.g., cannot reflect the uses of the candidate compressed texture resources), making it very cumbersome to find a candidate compressed texture resource (e.g., when needing to read a texture resource for a specific purpose, it is necessary to read out the candidate compressed texture resource first to determine whether it meets the requirements). To this end, in an embodiment, candidate storage addresses are determined by replacing the placeholder data of the initial compressed texture resources through the foregoing operations, and then the candidate compressed texture resources are stored. The placeholder data is a texture resource name.

In some embodiments, FIG. 6 is a schematic flowchart of storing a plurality of candidate compressed texture resources according to an embodiment of this application. Based on FIG. 6, operation 3201 includes: Operation 32011: Store, for each candidate compression format, the candidate compressed texture resource according to a candidate storage address corresponding to the texture resource name and the candidate compression format.

The candidate storage address is configured for representing the storage location of the candidate compressed texture resource corresponding to the candidate compression format.

In actual implementation, operation 32011 includes: acquiring a first correspondence table, the first correspondence table indicating a correspondence among texture resource name, the candidate compression format, and the candidate storage address; and storing the candidate compressed texture resource based on the first correspondence table. The following is an example of the first correspondence table:

**Table 2**

| Candidate Compression Format | Texture Resource Name | Candidate Storage Address |
|---|---|---|
| ETC | Diffuse Map | XX: XX\MEh1 |
| ASTC | Diffuse Map | XX: XX\MAh2 |
| PVRTC | Diffuse Map | XX: XX\MPh3 |
| DXT | Diffuse Map | XX: XX\MDh4 |
| ETC | Normal Map | XX: XX\MEh5 |
| ... | ... | ... |

Referring to Table 2, if the texture resource name is Diffuse Map and the candidate compression format is ETC, the candidate storage address is XX: XX\MEh1. The same applies to other texture resource names and candidate compression formats, which will not be described redundantly here.

Thus, the advantage of the embodiment that uses table lookup to determine the candidate storage addresses is that it is not only simple and easy to implement, but also has low processing overhead.

In actual implementation, operation 32011 further includes: performing a target operation on the texture resource name and the candidate compression format to obtain the candidate storage address; and storing the candidate compressed texture resource according to the candidate storage address.

The target operation is a preset operational formula or operational function, such as a hash function. A texture resource name and a candidate compression format are input into the target operation, and the output result is a candidate storage address. In an example, with the texture resource name and the candidate compression format as inputs, a unique identifier is generated through the hash function, and then the identifier is combined with a storage path to obtain the candidate storage address. This ensures that each candidate compressed texture resource has a unique storage address, and the candidate compressed texture resource can be retrieved based on the texture resource name and the candidate compression format.

Thus, the approach of determining the candidate storage address through the target operation not only has high accuracy, but also allows the target operation to be adjusted as needed, providing strong flexibility.

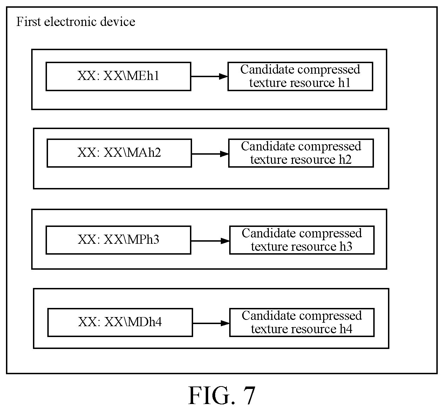

In some embodiments, it is assumed that the texture resource name is Diffuse Map. The target application texture resource is compressed according to the ETC format to obtain a candidate compressed texture resource h1, with the candidate storage address being "XX: XX\MEh1". The target application texture resource is compressed according to the ASTC format to obtain a candidate compressed texture resource MAh2, with the candidate storage address being "XX: XX\h2". The target application texture resource is compressed according to the PVRTC format to obtain a candidate compressed texture resource h3, with the candidate storage address being "XX: XX\MPh3". The target application texture resource is compressed according to the DXT format to obtain a candidate compressed texture resource h4, with the candidate storage address being "XX: XX\MDh4". FIG. 7 is a schematic diagram of a compression process according to an embodiment of this application. Based on FIG. 7, the first electronic device stores: the candidate compressed texture resource h1 according to "XX:XX\MEh1"; the candidate compressed texture resource h2 according to "XX:XX\MAh2"; the candidate compressed texture resource h3 according to "XX:XX\MPh3"; and the candidate compressed texture resource h4 according to "XX:XX\MDh4".

By applying the above embodiment, since the placeholder data is utilized to store the candidate compressed texture resources, the efficiency of reading from the first electronic device the candidate compressed texture resources required by the second electronic device can be improved while still enabling the storage of the candidate compressed texture resources. For example, referring to the following description, after identifying the placeholder data in the updated resource package, the second electronic device can request candidate compressed texture resources from the first electronic device in accordance with the placeholder data. Since the storage on the first electronic device is based on the placeholder data, the resource reading efficiency can be improved.

Although the first electronic device stores candidate compressed texture resources in a plurality of candidate compression formats, if the target compression format supported by the second electronic device may not be any of the plurality of candidate compression formats, the first electronic device cannot transmit the suitable candidate compressed texture resource to the terminal.

On this basis, in an embodiment, referring to FIG. 6, operation 3201 may further include the following operation: Operation 32012: Store the plurality of candidate compressed texture resources and the target application texture resource. In this way, when the terminal subsequently requests a texture resource from the server, even if the target compression format supported by the terminal does not belong to the plurality of candidate compression formats, the server can transmit the target application texture resource to the terminal, ensuring that the terminal can render the target application normally.

Detailed Description of Operations Performed by Second Electronic Device (e.g., Terminal) After operation 320

As shown in FIG. 3, according to an embodiment of this application, the application texture rendering method (performed by the second electronic device) includes:
Operation 410: Determine a target compression format supported by the second electronic device in response to acquiring placeholder data of a target application transmitted from a first electronic device;
Operation 420: Transmit a resource request to the first electronic device, the resource request being configured for requesting a target compressed texture resource, and the target compressed texture resource being obtained by compressing a target application texture resource in the target compression format; and
Operation 430: Receive the target compressed texture resource from the first electronic device, and render the target application based on the target compressed texture resource.

In the above operations 410 to 430, regardless of the compression format supported by the second electronic device, since the second electronic device does not receive the specific compressed texture resource but instead the placeholder data, it obtains the target compressed texture resource by requesting from the first electronic device the target compressed texture resource in the target compression format, thereby performing rendering. In this way, the universality of application texture rendering on terminals supporting different compression formats can be improved, thereby improving the rendering efficiency of application textures. Moreover, since the placeholder data is much smaller than the compressed texture resources, the occupation of the terminal's storage space can be greatly reduced, thereby reducing the waste of space resources.

In some embodiments, the process of operation 410 specifically includes: receiving an application container of the target application from the first electronic device, the application container including an updated resource package, where the updated resource package is obtained by the first electronic device replacing an initial compressed texture resource in an initial resource package of the target application with the placeholder data; and determining the target compression format supported by the second electronic device in response to identifying that the updated resource package contains the placeholder data.

The first electronic device stores application containers of a plurality of candidate applications. The second electronic device may transmit, in response to a user's download operation on the target application, a resource download request to the first electronic device to download the resource package of the target application. The plurality of candidate applications include the target application. The first electronic device transmits the application container of the target application to the second electronic device based on the download request from the second electronic device.

On the first electronic device side, the application container of the target application may include the initial resource package. However, after the first electronic device performs operation 3101, the initial resource package has been replaced with the updated resource package. To be specific, the application container of the target application transmitted by the first electronic device to the second electronic device includes the updated resource package.

The updated resource package is obtained by the first electronic device replacing the initial compressed texture resource in the initial resource package of the target application with the placeholder data. In light of the above, it can be seen that the first electronic device may transmit to the second electronic device an application container that includes only the updated resource package, or may transmit an application container that includes both an application package and the updated resource package.

In operation 410 of some embodiments, when the second electronic device runs the target application, it may need to call a texture resource for rendering. Then, the second electronic device parses the updated resource package for the purpose of extracting the texture resource from the updated resource package. Since the updated resource package no longer contains specific texture resources but instead contains the placeholder data, the second electronic device cannot extract the texture resource from the updated resource package. To this end, the second electronic device determines the target compression format supported by the second electronic device in response to identifying that the resource package contains the placeholder data, so as to request, based on the target compression format, from the first electronic device the compressed texture resource required for rendering the target application and capable of being parsed by the second electronic device.

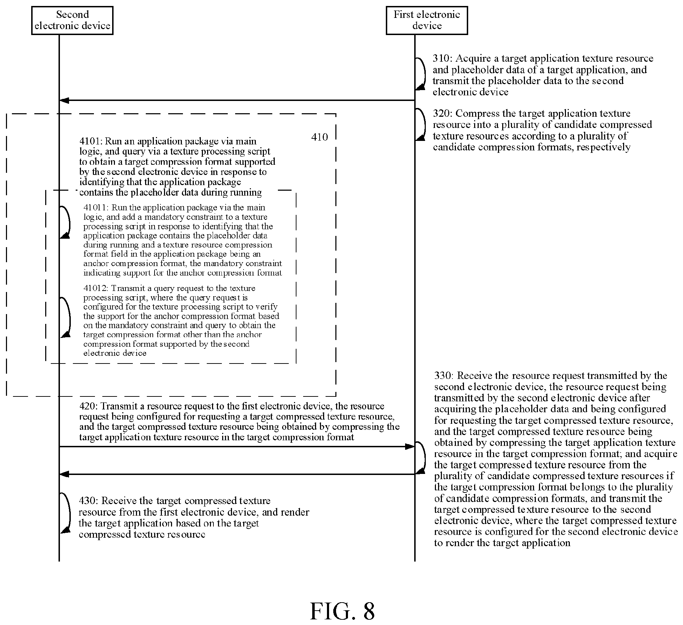

In some embodiments, FIG. 8 is a schematic flowchart of an application texture rendering method according to an embodiment of this application. Based on FIG. 8, operation 410 includes: Operation 4101: Run the application package via main logic, and query via a texture processing script to obtain the target compression format supported by the second electronic device in response to identifying that the application package contains the placeholder data during running.

The main logic refers to a process/thread of the terminal that runs the target application. The texture processing script refers to a script used when rendering the target application. In an example, the rendering of a target application (WebGL game) exported from the Unity platform is implemented based on the WebGL API. The WebGL API is called using JavaScript scripts. Therefore, the application package exported from the Unity platform ultimately needs to be basically called in JavaScript scripts.

Thus, in this embodiment, the placeholder data is identified via the main logic during the running process and the texture processing script is queried via the main logic to obtain the target compression format. Thus, the query efficiency is improved.

When the target application is running, the main logic may query the JavaScript script layer for the list of compression formats supported by the current terminal (e.g., graphics processing unit (GPU)) to determine the target compression format from the list of compression formats. Since the server has performed data replacement processing on the initial resource package, the "placeholder data" may not be supported by all terminals. Therefore, in an embodiment, during the querying for the list of compression formats supported, a mandatory constraint will be added to the texture processing script so that the "placeholder data" is always supported for rendering by the current terminal.

In a specific implementation of this embodiment, referring to FIG. 8, operation 4101 includes:
Operation 41011: Run the application package via the main logic, and add a mandatory constraint to the texture processing script in response to identifying that the application package contains the placeholder data during running and a texture resource compression format field in the application package being an anchor compression format, the mandatory constraint indicating support for the anchor compression format; and
Operation 41012: Transmit a query request to the texture processing script; where the query request is configured for the texture processing script to verify the support for the anchor compression format based on the mandatory constraint and query to obtain the target compression format other than the anchor compression format supported by the second electronic device.

In operation 41011, the anchor compression format is a specific compression format indicating that the second electronic device is to request texture resources from the first electronic device. Since the second electronic device may not support the anchor compression format, in this embodiment of this application, the main logic adds the mandatory constraint to the texture processing script, and the mandatory constraint indicates support for the anchor compression format. The mandatory constraint is a processing script that requires support for the anchor compression format.

In operation 41012, since the mandatory constraint has been added to the texture processing script, when the second electronic device transmits the query request to the texture processing script, support for the anchor compression format may be verified, and the supported target compression format other than the anchor compression format may be obtained.

Thus, the advantage of the above embodiment of adding the mandatory constraint to the texture processing script is that it can be ensured that any terminal can support the anchor compression format, thereby improving the effectiveness of texture resource rendering.

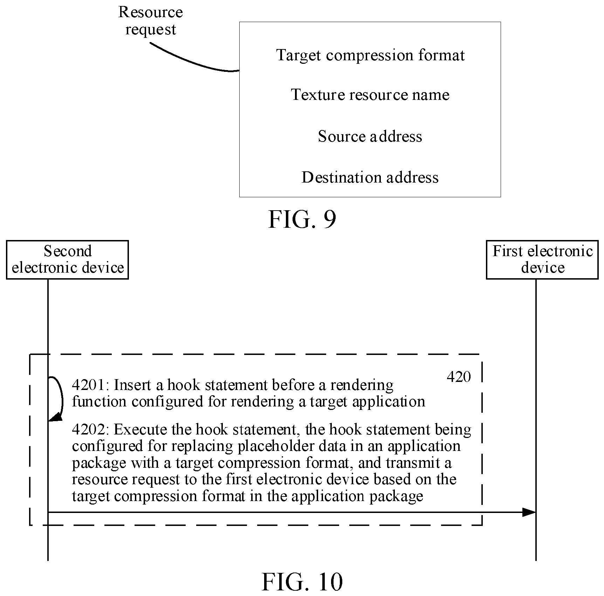

In operation 420 of some embodiments, the resource request is transmitted to the first electronic device, i.e., a request for the target compressed texture resource in the target compression format. The resource request may include a source address of the second electronic device, a destination address of the first electronic device, a texture resource name, and the target compression format. In an example, FIG. 9 is a schematic diagram of a resource request according to an embodiment of this application. Based on FIG. 9, the resource request for the target compressed texture resource in the target compression format includes the target compression format, the texture resource name, the source address, and the destination address, so that the first electronic device transmits the target compressed texture resource to the second electronic device according to the target compression format and the texture resource name in the resource request. The resource request may alternatively include the source address of the second electronic device, the destination address of the first electronic device, and a target storage address corresponding to the texture resource name and the target compression format, so that the first electronic device transmits the target compressed texture resource to the second electronic device according to the target storage address in the request.

In an embodiment, FIG. 10 is a schematic flowchart of transmitting a resource request according to an embodiment of this application. Based on FIG. 10, operation 420 includes:
Operation 4201: Insert a hook statement before a rendering function configured for rendering the target application; and
Operation 4202: Execute the hook statement, the hook statement being configured for replacing the placeholder data in the application package with the target compression format, and transmit the resource request to the first electronic device based on the target compression format in the application package.

A hook statement refers to, in a computer program, modifying the control flow of the program to execute additional operations or code. A hook statement is typically implemented by injecting code or modifying the instruction stream of the program. Common hook statements include jump instructions, function calls, variable modifications, and the like. In this embodiment, the hook statement is mainly utilized to control the second electronic device to request the target compressed texture resource from the first electronic device before executing the rendering function.

In actual implementation, the hook statement may be inserted before the rendering function configured for rendering the target application in the following manners: (1) Modifying the rendering loop: directly adding custom code to the rendering loop so that the code is executed before each rendering pass; (2) Using rendering pipeline hooks: inserting hooks at specific stages of the rendering pipeline, for example, using hooks of ID3D11 Device Context in DirectX or hooks of frame buffer objects in OpenGL; (3) Wrapping the rendering function: creating a new rendering function that executes custom code before or after calling the original rendering function; and (4) Using middleware or frameworks: utilizing interfaces provided by existing middleware or frameworks that allow insertion of custom code into the rendering process. The embodiments of this application impose no limitations in this regard.

Since the mandatory constraint has been added to the texture processing script in the foregoing operations, the format within the updated resource package can definitely be "supported" by the current second electronic device. Therefore, when the target application is rendered with the texture resource, the rendering function for rendering the target application will be executed. For instance, assuming that the target application is a WebGL game, the rendering function WebGLRenderingContext.compressedTexSubImage2D of WebGL will be ultimately executed. By inserting the hook statement before the rendering function configured for rendering the target application and then executing the hook, the placeholder data in the resource package may be replaced with the target compression format, and the request for the target compressed texture resource may be transmitted to the first electronic device based on the target compression format in the resource package. After the second electronic device reads the target compressed texture resource from the first electronic device into a running memory space, the target compressed texture resource may be uploaded to the GPU of the second electronic device to complete the desired rendering of the texture resource. Upon successful uploading to the GPU, the second electronic device immediately releases the running memory space occupied by the target compressed texture resource.

Thus, by using the hook statement inserted before executing the rendering function, it is ensured that the second electronic device can obtain the target compressed texture resource from the first electronic device, thereby improving the effectiveness of rendering the target application.

In actual implementation, in operation 420, the second electronic device transmits the request for the target compressed texture resource to the first electronic device. Then, in operation 330, after receiving the request for the target compressed texture resource in the target compression format transmitted by the second electronic device, the first electronic device may transmit the target compressed texture resource to the second electronic device. Further, in operation 430, the second electronic device receives the target compressed texture resource from the first electronic device to render the target application. Therefore, operation 330 is first described in detail below, followed by a detailed description of operation 430.

### Detailed Description of Operation 330

With reference to FIG. 3, operation 330 is divided into: Operation 3301: Receive the resource request transmitted by the second electronic device, the resource request being transmitted by the second electronic device after acquiring the placeholder data and being configured for requesting the target compressed texture resource, and the target compressed texture resource being obtained by compressing the target application texture resource in the target compression format; Operation 3302: Acquire the target compressed texture resource from the plurality of candidate compressed texture resources if the target compression format belongs to the plurality of candidate compression formats; and Operation 3303: Transmit the target compressed texture resource to the second electronic device; where the target compressed texture resource is configured for the second electronic device to render the target application.

The resource request transmitted by the second electronic device to the first electronic device may include the texture resource name and the target compression format, so that the first electronic device determines the target storage address according to the texture resource name and the target compression format in the resource request, and then the first electronic device acquires the target compressed texture resource according to the target storage address.

Alternatively, the resource request transmitted by the second electronic device to the first electronic device may directly include the target storage address (i.e., the second electronic device determines the target storage address in advance based on the texture resource name and the target compression format), so that the first electronic device acquires the target compressed texture resource according to the target storage address.

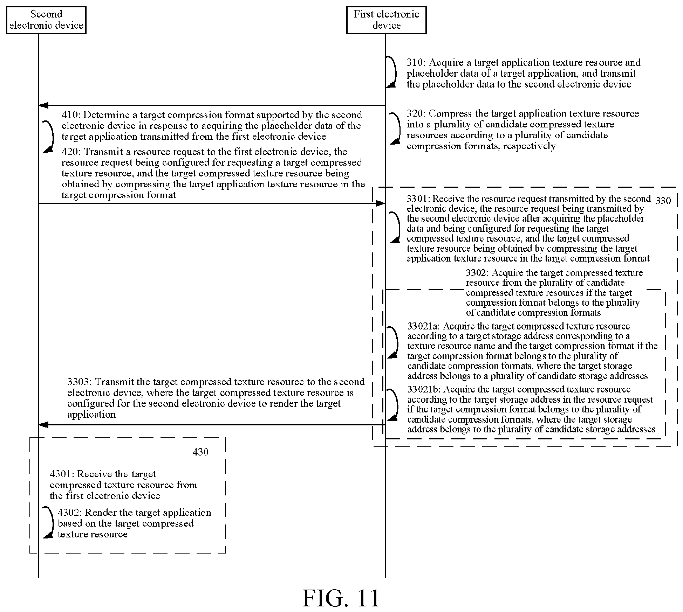

In some embodiments, FIG. 11 is a schematic flowchart of an application texture rendering method according to an embodiment of this application. Based on FIG. 11, when the resource request transmitted by the second electronic device to the first electronic device includes the texture resource name and the target compression format, operation 3302 includes: Operation 33021a: Acquire the target compressed texture resource according to the target storage address corresponding to the texture resource name and the target compression format if the target compression format belongs to the plurality of candidate compression formats, where the target storage address belongs to a plurality of candidate storage addresses.

Thus, since the first electronic device (e.g., a server) determines the target storage address according to the texture resource name and the target compression format, the computational burden on the second electronic device (e.g., a terminal) can be reduced.

In actual implementation, as described previously, the process of storing, for each candidate compression format, the candidate compressed texture resource according to the candidate storage address corresponding to the texture resource name and the candidate compression format may include: acquiring a first correspondence table, the first correspondence table indicating a correspondence among the texture resource name, the candidate compression format, and the candidate storage address; and storing the candidate compressed texture resource based on the first correspondence table.

On this basis, the target storage address may be obtained by the first electronic device looking up the first correspondence table based on the texture resource name and the target compression format. That is, before operation 33021a, the first correspondence table is looked up based on the texture resource name and the target compression format to obtain the target storage address if the target compression format belongs to the plurality of candidate compression formats. Thus, the target compressed texture resource is acquired based on the acquired target storage address.

In light of the above, the candidate compression formats include ETC format, ASTC format, PVRTC format, DXT format, and the like. The first correspondence table may refer to Table 2 above. In an example, assuming that the target compression format is the ETC format and the texture resource name is Diffuse Map, the first electronic device (e.g., a server) looks up the first correspondence table according to the ETC format and Diffuse Map to obtain the target storage address as XX: XX\MEh1. The server determines the candidate compressed texture resource h1 as the target compressed texture resource according to XX: XX\MEh1, and then transmits it to the second electronic device (e.g., a terminal). In another example, assuming that the target compression format is the DXT format and the texture resource name is Diffuse Map, the server looks up the first correspondence table according to the DXT format and Diffuse Map to obtain the target storage address as XX: XX\MDh4. The server determines the candidate compressed texture resource h4 as the target compressed texture resource according to XX: XX\MDh4, and then transmits it to the terminal.

Thus, using table lookup to determine the target storage address is not only simple and easy to implement, but also incurs low processing overhead.

In actual implementation, as described previously, the process of storing, for each candidate compression format, the candidate compressed texture resource according to the candidate storage address corresponding to the texture resource name and the candidate compression format may alternatively include: performing a target operation on the texture resource name and the candidate compression format to obtain the candidate storage address; and storing the candidate compressed texture resource according to the candidate storage address.

On this basis, the target storage address may be obtained by the first electronic device performing the target operation based on the texture resource name and the target compression format. To be specific, before operation 33021a, the target operation is performed on the texture resource name and the target compression format to obtain the target storage address. Thus, the target compressed texture resource is acquired based on the acquired target storage address.

The target operation is a preset operational formula or operational function, such as a hash function. The texture resource name and the target compression format are input into the target operation, and the output result is the target storage address. In an example, with the texture resource name and the target compression format as inputs, a unique identifier is generated through the hash function, and then the identifier is combined with a storage path to obtain the target storage address. The target storage address belongs to the plurality of candidate storage addresses, and each candidate storage address corresponds to one candidate compressed texture resource. Thus, the target compressed texture resource may be acquired according to the target storage address.

Thus, determining the target storage address through the target operation not only has high accuracy, but also allows the target operation to be adjusted as needed, providing strong flexibility.

In some other embodiments, with continued reference to FIG. 11, based on FIG. 11, when the resource request transmitted by the second electronic device to the first electronic device includes the target storage address, operation 3302 includes: Operation 33021b: Acquire the target compressed texture resource according to the target storage address in the resource request if the target compression format belongs to the plurality of candidate compression formats, where the target storage address belongs to the plurality of candidate storage addresses.

The target storage address may be obtained by the second electronic device looking up the first correspondence table based on the texture resource name and the target compression format. Alternatively, the target storage address may be obtained by the second electronic device applying the target operation to the texture resource name and the target compression format. The specific implementation process of the second electronic device looking up the first correspondence table or applying the target operation may refer to the implementation process of the first electronic device determining the target storage address as described above, and will not be described redundantly here.

Thus, since the second electronic device (e.g., a terminal) determines the target storage address according to the texture resource name and the target compression format, the computational burden on the first electronic device (e.g., a server) can be reduced.

In an embodiment, the second electronic device may detect the remaining computing capacity of the first electronic device. If the remaining computing capacity is less than a predetermined computing capacity threshold, the second electronic device determines a target storage address based on a texture resource name and a target compression format. If the remaining computing capacity is greater than or equal to the predetermined computing capacity threshold, the second electronic device transmits the texture resource name and the target compression format to the first electronic device, and the first electronic device determines the target storage address based on the texture resource name and the target compression format. In this way, the computational burden between the second electronic device and the first electronic device can be balanced.

In operation 33021a or 33021b described above, there is one target compression format, and therefore the target storage address determined based on the texture resource name and the target compression format is also one. However, in some embodiments, there are a plurality of target compression formats, so that a plurality of target storage addresses are determined based on the texture resource name and the plurality of target compression formats, thereby creating a need to determine target compressed texture resource based on the target storage addresses corresponding to the target compression formats.

The process of determining the target compressed texture resource based on the target storage addresses corresponding to the target compression formats is described below in various embodiments.

In a first embodiment, the process of acquiring the target compressed texture resource according to the target storage address in operation 33021a or operation 33021b includes: acquiring a compression loss rate for each target compression format if a plurality of target compression formats are provided; selecting a target storage address corresponding to a target compression format with a minimum compression loss rate from target storage addresses corresponding to the target compression formats based on the compression loss rates of the target compression formats; and acquiring the target compressed texture resource based on the selected target storage address.

The compression loss rate refers to a ratio of the amount of information lost during data compression to the total amount of original data. In a lossy compression algorithm, a portion of the data is discarded in order to reduce the file size, which results in a compression loss. The compression loss rate may be expressed by the following formula: Compression Loss Rate = (Size of Target Application Texture Resource - Size of Candidate Compressed Texture Resource)/Size of Target Application Texture Resource. The compression loss rate is usually expressed in the form of a percentage, which helps to measure the degree of impact of the compression algorithm on the data. A lower compression loss rate indicates that the compression algorithm achieves a better compression effect while preserving data quality.

By applying the above embodiment, determining the target compressed texture resource based on the target storage address corresponding to the minimum compression loss rate makes it possible to acquire the target compressed texture resource with high data quality, thereby improving rendering accuracy.

In a second embodiment, the process of acquiring the target compressed texture resource according to the target storage address in operation 33021a or operation 33021b includes: acquiring a compression rate for each target compression format if a plurality of target compression formats are provided; selecting a target storage address corresponding to a target compression format with a maximum compression rate from target storage addresses corresponding to the target compression formats based on the compression rates of the target compression formats; and acquiring the target compressed texture resource based on the selected target storage address.

The compression rate refers to a ratio of the size of the compressed data to the size of the original data. It indicates the relative size of the data after compression, usually expressed as a ratio or percentage. The compression rate may be expressed by the following formula: Compression Rate = Size of Candidate Compressed Texture Resource/Size of Target Application Texture Resource. A higher compression rate indicates a better compression effect, i.e., the data has been effectively compressed. Generally, the higher the compression rate, the smaller the size of the compressed data file, and the less storage space it occupies. The compression rate is an important indicator for measuring the effectiveness of a compression algorithm and is very important for scenarios where large amounts of data need to be stored in limited storage space.

In practical use, determining the target compressed texture resource based on the target storage address corresponding to the maximum compression rate makes it possible to acquire the target compressed texture resource with relatively small storage space, thereby reducing the occupation of storage space on the terminal. This is particularly suitable for terminals with relatively small storage space and can improve rendering efficiency.

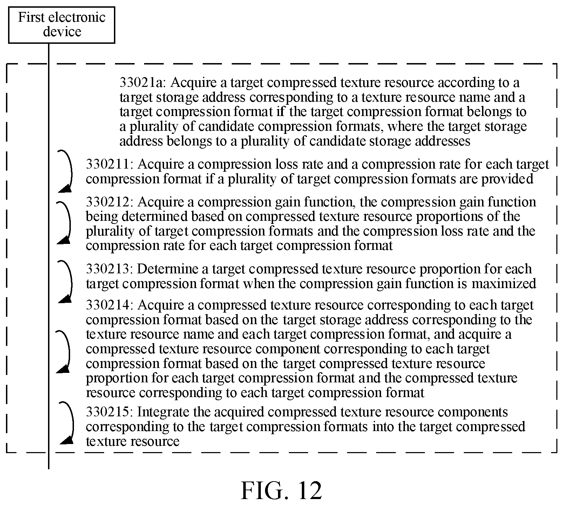

In a third embodiment, FIG. 12 is a schematic flowchart of determining a target compressed texture resource according to an embodiment of this application. Based on FIG. 12, operation 33021a includes:
Operation 330211: Acquire a compression loss rate and a compression rate for each target compression format if a plurality of target compression formats are provided;
Operation 330212: Acquire a compression gain function, the compression gain function being determined based on compressed texture resource proportions of the plurality of target compression formats and the compression loss rate and the compression rate for each target compression format;
Operation 330213: Determine a target compressed texture resource proportion for each target compression format when the compression gain function is maximized;
Operation 330214: Acquire a compressed texture resource corresponding to each target compression format based on a target storage address corresponding to the texture resource name and each target compression format, and acquire a compressed texture resource component corresponding to each target compression format based on the target compressed texture resource proportion for each target compression format and the compressed texture resource corresponding to each target compression format; and
Operation 330215: Integrate the acquired compressed texture resource components corresponding to the target compression formats into the target compressed texture resource.

Different from the above embodiments in which the target texture resource is determined according to the compression loss rate or the compression rate, this embodiment determines the target compressed texture resource based on both the compression loss rate and the compression rate. Furthermore, this embodiment does not simply determine the target compressed texture resource at a particular target storage address as the final target compressed texture resource. Instead, it integrates the compressed texture resource components corresponding to a plurality of target compression formats to obtain the final target compressed texture resource.

The compression loss rate and the compression rate in operation 330211 have been explained above and will not be described redundantly here. The compression gain function is configured to evaluate the average performance of compression algorithms corresponding to a plurality of target compression formats. The compression gain function is determined based on the compressed texture resource proportions of the plurality of target compression formats and the compression loss rate and the compression rate for each target compression format. The compressed texture resource proportion refers to the proportion of the texture resource corresponding to each target compression format. The sum of the compressed texture resource proportions of all target compression formats is 1.

In some embodiments, operation 330212 includes: acquiring a compression gain sub-function for each target compression format, the compression gain sub-function being determined based on the compression loss rate and the compression rate for the target compression format; and taking a compressed texture resource proportion for each target compression format as a weight of the compression gain sub-function for each target compression format, and performing weighted summation on the compression gain sub-functions based on the weights to obtain the compression gain function.

For each target compression format, the compression loss rate may be calculated based on the initial compressed texture resource and the target application texture resource corresponding to the target compression format, and the compression rate may be calculated. For the specific calculation formulas of the compression loss rate and the compression rate, reference may be made to the above description, which will not be repeated here. The compression gain sub-function is directly proportional to the compression loss rate and inversely proportional to the compression rate.

In an example, the compression gain sub-function is calculated by the following formula: ${G}_{t} = \frac{1}{1 - {R}_{t}} * \frac{1}{1 + {L}_{t}}$ (1);
where *Gₜ* represents the compression gain sub-function for the t-th target compression format, *Rₜ* represents the compression rate for the t-th target compression format, and *Lₜ* represents the compression loss rate for the t-th target compression format. Formula (1) illustrates that the compression gain sub-function increases as the compression rate increases. To be specific, the higher the compression rate, the higher the compression gain coefficient. Formula (1) also illustrates that the compression gain sub-function decreases as the compression loss rate increases. To be specific, the higher the compression loss rate, the lower the compression gain coefficient.

The compressed texture resource proportion is configured for indicating the proportion of the texture resource of each target compression format. The above-mentioned compression rate and compression loss rate corresponding to each target compression format are known quantities (also referred to as constants), while the compressed texture resource proportion for each target compression format is an unknown quantity (also referred to as a variable). Therefore, the compression gain function refers to a function that takes the compressed texture resource proportion for each target compression format as a variable.

In an example, the compression gain function is calculated by the following formula: $G = {\sum }_{t = 1}^{T} {a}_{t} {G}_{t}$ (2);
where G represents the compression gain function, T represents the number of target compression formats, *aₜ* represents the compressed texture resource proportion for the t-th target compression format, and *Gₜ* represents the compression gain sub-function for the t-th target compression format.

After the compression gain function is determined, it is necessary to solve the compression gain function so as to obtain the target compressed texture resource proportion for each target compression format. The obtained target compressed texture resource proportion is a known quantity (also referred to as a constant), which can be configured for resource integration in subsequent operations. Therefore, in operation 330213, the target compressed texture resource proportions for the plurality of target compression formats are determined when the compression gain function is maximized.

Then, in operation 330214, the compressed texture resource corresponding to each target compression format is acquired based on the target storage address corresponding to the texture resource name and each target compression format, and the compressed texture resource component corresponding to each target compression format is acquired based on the target compressed texture resource proportion for each target compression format and the compressed texture resource corresponding to each target compression format.

In an example, it is assumed T=3, i.e., there are 3 target compression formats, and it is assumed that *G*₁=1, *G*₂=2, and *G*₃=3. It is necessary to maximize the compression gain function G=*a*₁*G*₁+*a*₂*G*₂+*a*₃*G*₃=*a*₁*1+*a*₂*2+*a*₃*3, and the constraint condition is *a*₁+*a*₂+*a*₃=1, and *a*₁, *a*₂, and *a*₃ are all greater than or equal to 0. When G=3, {*a*₁=0, *a*₂=0, *a*₃=1} can be obtained. Therefore, in this example, the target compressed texture resource proportion for the target compression format when t=1 is 0, the target compressed texture resource proportion for the target compression format when t=2 is 0, and the target compressed texture resource proportion for the target compression format when t=3 is 1. According to the target compressed texture resource proportion being {*a*₁=0, *a*₂=0, *a*₃=1}, the compressed texture resource component for the target compression format when t=1 is obtained as 0, the compressed texture resource component for the target compression format when t=2 is also obtained as 0, and the compressed texture resource component for the target compression format when t=3 is obtained as 1.

Finally, in operation 330215, the acquired compressed texture resource components corresponding to the target compression formats are integrated into the target compressed texture resource.

Following the above example, the acquired compressed texture resource components corresponding to 3 target compression formats are integrated into the target compressed texture resource.

The advantage of the above embodiment of determining the target compressed texture resource proportion for each target compression format by maximizing the compression gain function is that the accuracy and flexibility of determining the target compressed texture resource proportion can be improved.

The advantage of the above embodiment of integrating the compressed texture resources of the target compression formats according to the target compressed texture resource proportions to obtain the target compressed texture resource is that it can be ensured that the determined target compressed texture resource has a relatively high compression gain, thereby improving resource rendering quality.

### Detailed Description of Operation 430

With reference to FIG. 3, operation 430 is divided into: Operation 4301: Receive the target compressed texture resource from the first electronic device; and Operation 4302: Render the target application based on the target compressed texture resource.

In actual implementation, the first electronic device completes the transmission of the target compressed texture resource to the second electronic device by performing operation 3303, and accordingly, the second electronic device completes the reception of the target compressed texture resource from the first electronic device by performing operation 4301. After receiving the target compressed texture resource, the second electronic device may perform operation 4302 immediately, or may perform operation 4302 after verifying the target compressed texture resource. By adding the verification process, the validity and accuracy of the target compressed texture resource can be verified, thereby reducing waste of processing resources of the second electronic device caused by running an invalid or erroneous target compressed texture resource.

In an embodiment, operation 4302 includes: storing the target compressed texture resource in a target storage space, and transmitting the target compressed texture resource to a rendering processing unit; and deleting the target compressed texture resource from the target storage space after receiving a message indicating successful rendering by the rendering processing unit based on the target compressed texture resource.

The target storage space refers to a storage area on the second electronic device that is configured for storing data related to the target application. The target storage space stores an application container. Referring to the above, the application container includes the application package and the updated resource package. The second electronic device may store the target compressed texture resource in the updated resource package. Thus, after successful storage, the updated resource package includes the target compressed texture resource. The second electronic device may alternatively store the target compressed texture resource in a space other than the application container within the target storage space. The rendering processing unit is a processing unit configured to perform resource rendering, typically referring to a GPU.

By applying the above embodiment, after receiving the target compressed texture resource from the first electronic device, the second electronic device reads it into the target storage space of the target application and uploads it to the GPU, thereby completing the rendering of the texture resource. Moreover, after successful rendering, the second electronic device will immediately release the storage space occupied by the target compressed texture resource, thereby reducing space occupation while achieving rendering.

In an example, the process of the second electronic device rendering the target application based on the target compressed texture resource includes the following: (1) Loading the target compressed texture resource: the second electronic device needs to decompress, according to the supported target compression format, the target compressed texture resource into the target application texture resource, which may be an image file (e.g., in PNG, JPEG, or other formats) or other types of texture data. These data contain color information and other attributes of the texture. (2) Creating a texture object: the second electronic device converts the loaded texture data into a texture object, typically created in the rendering processing unit (e.g., a GPU), for subsequent rendering operation. (3) Binding the texture object: before rendering, the terminal needs to bind the required texture object to a specific texture unit of the rendering pipeline so that it can be used during the rendering process. (4) Using the texture in shaders: in a vertex shader and a fragment shader, a corresponding texture color value may be obtained from the bound texture object via texture coordinates and a texture sampler. (5) Rendering the object: when rendering the object, the second electronic device mixes the texture color into the final pixel color according to the required texture information and texture coordinates, thereby achieving a texture mapping effect. In summary, the process of the second electronic device rendering the target application using the target compressed texture resource involves operations such as loading the texture resource, creating the texture object, binding the texture object, using the texture in the shaders, and rendering the object. These operations need to be performed in the rendering processing unit to achieve the texture mapping effect.

### Detailed Description of Further Operations of Application Texture Rendering Method

In the above embodiments, the premise for the first electronic device to transmit the target compressed texture resource to the terminal is that the target compression format belongs to a plurality of candidate compression formats. However, in some embodiments, the target compression format may not belong to the plurality of candidate compression formats, making it impossible for the first electronic device to determine the target compressed texture resource from the candidate compressed texture resources and transmit it to the terminal. To this end, as described previously, based on FIG. 6, in operation 32012, not only the plurality of candidate compressed texture resources but also the target application texture resources are stored, so that the target application texture resources can be directly transmitted to the second electronic device.

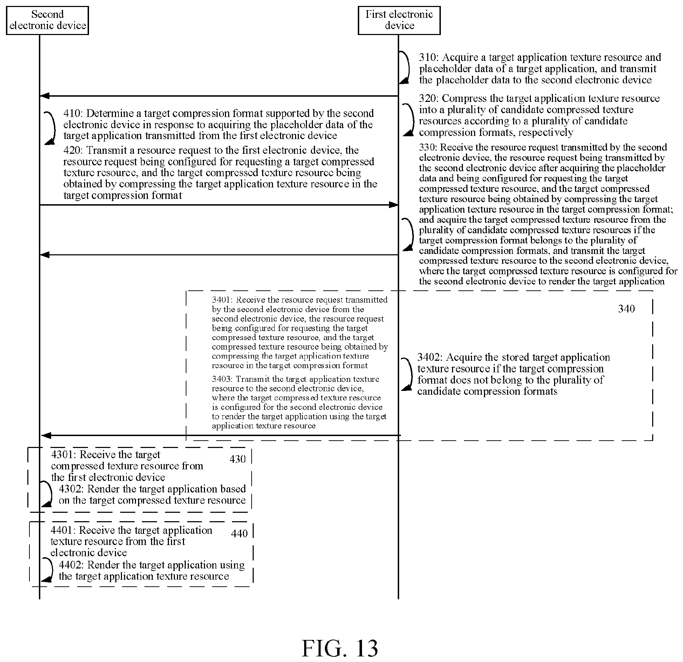

On this basis, FIG. 13 is a schematic flowchart of an application texture rendering method according to an embodiment of this application. Based on FIG. 13, the application texture rendering method further includes operation 340 (performed by the first electronic device) and operation 440 (performed by the second electronic device). Operation 340 may be divided into: Operation 3401: Receive a resource request transmitted by the second electronic device from the second electronic device, the resource request being configured for requesting a target compressed texture resource, and the target compressed texture resource being obtained by compressing a target application texture resource in a target compression format; Operation 3402: Acquire the stored target application texture resource if the target compression format does not belong to a plurality of candidate compression formats; and Operation 3403: Transmit the target application texture resource to the second electronic device; where the target compressed texture resource is configured for the second electronic device to render a target application using the target application texture resource. Operation 440 may be divided into: Operation 4401: Receive the target application texture resource from the first electronic device; and Operation 4402: Render the target application using the target application texture resource.

In operation 3401, a resource request transmitted by the second electronic device to the first electronic device may include a texture resource name and the target compression format, so that the first electronic device determines a target storage address according to the texture resource name and the target compression format in the request, and then the first electronic device acquires the target compressed texture resource according to the target storage address.

Alternatively, the resource request transmitted by the second electronic device to the first electronic device may directly include the target storage address (i.e., the second electronic device determines the target storage address in advance based on the texture resource name and the target compression format), so that the first electronic device acquires the target compressed texture resource according to the target storage address.

In operation 3402, since the target compression format does not belong to the plurality of candidate compression formats, the target storage address does not belong to a plurality of candidate storage addresses. Consequently, the first electronic device cannot obtain the target compressed texture resource according to the target storage address. Therefore, the first electronic device acquires the stored target application texture resource.

Then, in operation 3403, the first electronic device transmits the target application texture resource to the second electronic device.

In operation 4401, different from operation 4301 in which the target compressed texture resource is received, since the target compression format supported by the second electronic device does not belong to the plurality of candidate compression formats, even if the target compressed texture resource is obtained, it cannot be parsed normally. Therefore, the second electronic device receives the target application texture resource, thereby enabling resource rendering to be completed without requiring the terminal to perform parsing. Thus, the effectiveness of resource rendering is improved.

The advantage of the embodiment of operations 340 and 440 described above is that, even if the target compression format supported by the second electronic device does not belong to the plurality of candidate compression formats, the second electronic device will still receive the target application texture resource transmitted by the server, allowing the second electronic device to perform normal rendering and improving the effectiveness of application texture resource rendering.

### Schematic diagrams of Overall Implementations of an Application Texture Rendering Method According to an Embodiment of this application

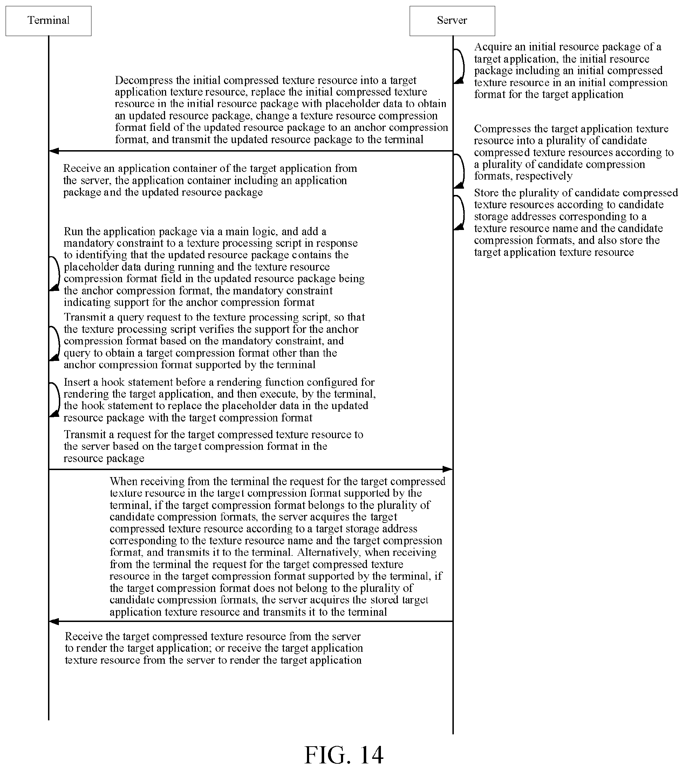

FIG. 14 is a schematic flowchart of an application texture rendering method according to an embodiment of this application. Based on FIG. 14, the implementation details of the application texture rendering method according to this embodiment of this application are illustrated in detail below by way of example.
(1) A server (a first electronic device) acquires an initial resource package of a target application, the initial resource package including an initial compressed texture resource in an initial compression format for the target application.

For example, assuming that the initial compression format is ETC format and the initial compressed texture resource is an initial compressed diffuse map resource, the initial resource package includes the initial compressed diffuse map resource in the ETC format, and a texture resource compression format field in the initial resource package is the ETC format.

(2) The server decompresses the initial compressed texture resource into a target application texture resource, replaces the initial compressed texture resource in the initial resource package with placeholder data to obtain an updated resource package, changes the texture resource compression format field of the updated resource package to an anchor compression format, and transmits the updated resource package to a terminal.

For example, the server decompresses the initial compressed diffuse map resource into a target application diffuse map resource, and replaces the initial compressed diffuse map resource in the initial resource package with placeholder data (specifically, "Diffuse Map" as the placeholder data); and the server further changes the texture resource compression format field from the ETC format to the anchor compression format, thereby obtaining and transmitting the updated resource package to the terminal.

(3) The server compresses the target application texture resource into a plurality of candidate compressed texture resources according to a plurality of candidate compression formats, respectively.

For example, the candidate compression formats may include ETC format, ASTC format, PVRTC format, DXT format, and the like. The ETC format corresponds to a candidate compressed texture resource h1, the ASTC format corresponds to a candidate compressed texture resource h2, the PVRTC format corresponds to a candidate compressed texture resource h3, and the DXT format corresponds to a candidate compressed texture resource h4.

(4) The server stores the plurality of candidate compressed texture resources according to candidate storage addresses corresponding to a texture resource name and the candidate compression formats, and also stores the target application texture resource.

The specific process in which the server determines the candidate storage addresses according to the texture resource name and the candidate compression formats has been described above and will not be described redundantly here. For example, the plurality of candidate storage addresses include: the candidate storage address XX: XX\MEh1 corresponding to the ETC format; the candidate storage address XX: XX\MAh2 corresponding to the ASTC format; the candidate storage address XX: XX\MPh3 corresponding to the PVRTC format; and the candidate storage address XX: XX\MDh4 corresponding to the DXT format, and the like.

(5) The terminal (a second electronic device) receives an application container of the target application from the server, the application container including an application package and the updated resource package. With reference to operation (1), the updated resource package includes the placeholder data and the texture resource compression format field.

(6) The terminal runs the application package via main logic, and adds a mandatory constraint to a texture processing script in response to identifying that the updated resource package contains the placeholder data during running and the texture resource compression format field in the updated resource package being the anchor compression format, the mandatory constraint indicating support for the anchor compression format.

(7) The terminal transmits a query request to the texture processing script, so that the texture processing script verifies support for the anchor compression format based on the mandatory constraint, and queries to obtain the target compression format other than the anchor compression format supported by the terminal. For example, the target compression format supported by the terminal is the ASTC format.

(8) The terminal inserts a hook statement before a rendering function configured for rendering the target application. Next, the terminal executes the hook statement to replace the placeholder data in the updated resource package with the target compression format.

(9) The terminal transmits a request for the target compressed texture resource to the server based on the target compression format in the resource package. The request may include the texture resource name and the target compression format.

For example, the terminal replaces the placeholder data in the updated resource package with the ASTC format, and the request transmitted by the terminal to the server includes Diffuse Map and the ASTC format.

(10) When the server receives from the terminal a request for the target compressed texture resource in the target compression format supported by the terminal, if the target compression format belongs to the plurality of candidate compression formats, the server acquires the target compressed texture resource according to a target storage address corresponding to the texture resource name and the target compression format, and transmits it to the terminal. Alternatively, when the server receives from the terminal the request for the target compressed texture resource in the target compression format supported by the terminal, if the target compression format does not belong to the plurality of candidate compression formats, the server acquires the stored target application texture resource and transmits it to the terminal.

For example, since the ASTC format supported by the terminal is included in the plurality of candidate compression formats, the server may determine the target storage address as XX: XX\MAh2 from the plurality of candidate storage addresses according to Diffuse Map and the ASTC format, and acquire the target compressed texture resource based on XX: XX\MAh2.

(11) The terminal receives the target compressed texture resource from the server to render the target application. Alternatively, the terminal receives the target application texture resource from the server to render the target application.

The embodiments of this application can effectively solve the problem in the Unity platform of relatively fixed compression formats in individual resource packages when distributing a target application (e.g., a WebGL game) on a per-terminal basis, thereby enabling the target application to fully leverage the rendering performance improvements brought by GPU computation and storage for texture resources on different terminals/devices. From the perspective of application running, since the texture resources in the embodiments of this application are truly loaded on demand (i.e., they are loaded into memory for use only when rendering is required), and the texture resource file serves as the smallest granularity unit, the granularity is finer compared to the Unity resource package solution provided by the Unity platform. This avoids additional memory occupation caused by other idle resources within an AB package. It also eliminates the problem of redundant disk and memory space occupation caused by the same resource being repeatedly packaged in a plurality of Unity resource packages. From the perspective of application developers, the embodiments of this application perform corresponding processing on the exported application container, so there is no need to modify or edit any code in the application package. The usage method only requires conversion through a panel, making it easy for widespread use. The embodiments of this application have high universality and achieve a reduction in the occupation of memory space on the terminal.

### Descriptions of Apparatuses and Devices of Embodiments of This Application

Although the steps in each of the above flowcharts are shown in sequence as indicated by arrows, these steps are not necessarily performed sequentially in the order indicated by the arrows.

Unless otherwise explicitly specified in this application, execution of these operations is not strictly limited by the sequence, and these operations may be performed in other sequences. Moreover, at least part of the operations in the above flowcharts may include a plurality of operations or a plurality of stages. These operations or stages are not necessarily executed at the same time, but may be executed at different times. The order of execution of these operations or stages is not necessarily performed sequentially, but may be performed in turn or alternately with other operations or at least a part of operations or stages of other operations.

In various specific implementations of this application, when it is necessary to perform relevant processing based on data related to object characteristics, such as object attribute information or attribute information sets, permission or consent of the object is obtained first. Moreover, the collection, use, and processing of such data comply with relevant laws, regulations, and standards. Furthermore, when object attribute information needs to be obtained in the embodiments of this application, individual permission or individual consent of an object is obtained through a pop-up window or jumping to a confirmation page. After the individual permission or the individual consent of the object is explicitly obtained, necessary object-related data for enabling the embodiments of this application to operate normally is obtained.

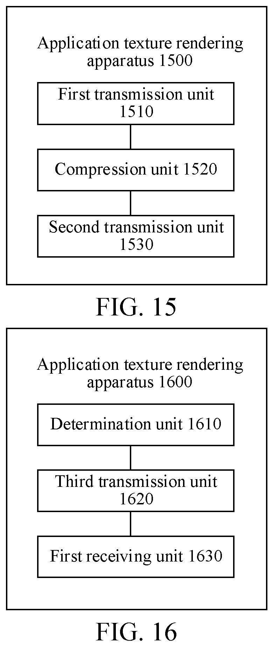

FIG. 15 is a schematic structural diagram of an application texture rendering apparatus 1500 applied to a first electronic device according to an embodiment of this application. Based on FIG. 15, the application texture rendering apparatus 1500 specifically includes:
a first transmission unit 1510 configured to acquire a target application texture resource and placeholder data of a target application, and transmit the placeholder data to a second electronic device;
a compression unit 1520 configured to compress the target application texture resource into a plurality of candidate compressed texture resources according to a plurality of candidate compression formats, respectively; and
a second transmission unit 1530 configured to: receive a resource request transmitted by the second electronic device, the resource request being transmitted by the second electronic device after acquiring the placeholder data and being configured for requesting a target compressed texture resource, and the target compressed texture resource being obtained by compressing the target application texture resource in a target compression format; and acquire the target compressed texture resource from the plurality of candidate compressed texture resources if the target compression format belongs to the plurality of candidate compression formats, and transmit the target compressed texture resource to the second electronic device; where the target compressed texture resource is configured for the second electronic device to render the target application.

In an embodiment, the first transmission unit 1510 is further configured to:
acquire an initial resource package of the target application, the initial resource package including an initial compressed texture resource in an initial compression format for the target application; and
decompress the initial compressed texture resource to obtain the target application texture resource.

In an embodiment, the initial resource package further includes an initial compression format name; and the first transmission unit 1510 is further configured to:
acquire an initial compression algorithm corresponding to the initial compression format name; and
decompress the initial compressed texture resource into the target application texture resource based on the initial compression algorithm.

In an embodiment, the apparatus further includes a first acquisition unit configured to:
acquire the initial resource package of the target application, the initial resource package including the initial compressed texture resource of the target application; and
replace the initial compressed texture resource in the initial resource package with the placeholder data to obtain an updated resource package; and
the first transmission unit 1510 is further configured to:
   transmit the updated resource package to the second electronic device.

In an embodiment, the apparatus further includes an updating unit configured to:
change a texture resource compression format field of the updated resource package to an anchor compression format to obtain a new updated resource package; and
the first transmission unit 1510 is further configured to:
   transmit the new updated resource package to the second electronic device;
   where the second electronic device adds a mandatory constraint to a texture processing script when identifying that the texture resource compression format field is the anchor compression format, the mandatory constraint indicating support for the anchor compression format.

In an embodiment, the placeholder data is a texture resource name, and the resource request includes the texture resource name and the target compression format; the apparatus further includes a storage unit configured to:
store, for each candidate compression format, the candidate compressed texture resource according to a candidate storage address corresponding to the texture resource name and the candidate compression format; and
the second transmission unit 1530 is further configured to acquire the target compressed texture resource according to a target storage address corresponding to the texture resource name and the target compression format if the target compression format belongs to the plurality of candidate compression formats, where the target storage address belongs to a plurality of candidate storage addresses.

In an embodiment, the storage unit is further configured to:
perform a target operation on the texture resource name and the candidate compression format to obtain the candidate storage address; and
store the candidate compressed texture resource according to the candidate storage address; and
the second transmission unit 1530 is further configured to:
perform the target operation on the texture resource name and the target compression format to obtain the target storage address if the target compression format belongs to the plurality of candidate compression formats.

In an embodiment, the storage unit is further configured to:
acquire a first correspondence table, the first correspondence table indicating a correspondence among the texture resource name, the candidate compression format, and the candidate storage address; and
store the candidate compressed texture resource based on the first correspondence table; and
the second transmission unit 1530 is further configured to:
look up the first correspondence table based on the texture resource name and the target compression format to obtain the target storage address if the target compression format belongs to the plurality of candidate compression formats.

In an embodiment, the placeholder data is a texture resource name; the resource request includes a target storage address that is determined by the second electronic device according to the texture resource name and the target compression format; the storage unit is further configured to:
store, for each candidate compression format, the candidate compressed texture resource according to a candidate storage address corresponding to the texture resource name and the candidate compression format; and
the second transmission unit 1530 is further configured to:
acquire the target compressed texture resource according to the target storage address in the resource request if the target compression format belongs to the plurality of candidate compression formats, where the target storage address belongs to a plurality of candidate storage addresses.

In an embodiment, the second transmission unit 1530 is further configured to:
acquire a compression loss rate for each target compression format if a plurality of target compression formats are provided;
select a target storage address corresponding to a target compression format with a minimum compression loss rate from target storage addresses corresponding to the target compression formats based on the compression loss rates of the target compression formats; and
acquire the target compressed texture resource based on the selected target storage address.

In an embodiment, there are a plurality of target compression formats; and
the second transmission unit 1530 is further configured to:
acquire a compression loss rate and a compression rate for each target compression format if a plurality of target compression formats are provided;
acquire a compression gain function, the compression gain function being determined based on compressed texture resource proportions of the plurality of target compression formats and the compression loss rate and the compression rate for each target compression format;
determine a target compressed texture resource proportion for each target compression format when the compression gain function is maximized;
acquire a compressed texture resource corresponding to each target compression format based on a target storage address corresponding to the texture resource name and each target compression format, and acquire a compressed texture resource component corresponding to each target compression format based on the target compressed texture resource proportion for each target compression format and the compressed texture resource corresponding to each target compression format; and integrate the acquired compressed texture resource components corresponding to the target compression formats into the target compressed texture resource.

In an embodiment, the second transmission unit 1530 is further configured to:
acquire a compression gain sub-function for each target compression format, the compression gain sub-function being determined based on the compression loss rate and the compression rate for the target compression format; and
take a compressed texture resource proportion for each target compression format as a weight of the compression gain sub-function for each target compression format, and perform weighted summation on the compression gain sub-functions based on the weights to obtain the compression gain function.

In an embodiment, the second transmission unit 1530 is further configured to:
acquire a compression rate for each target compression format if a plurality of target compression formats are provided;
select a target storage address corresponding to a target compression format with a maximum compression rate from target storage addresses corresponding to the target compression formats based on the compression rates of the target compression formats; and
acquire the target compressed texture resource based on the selected target storage address.

In an embodiment, the second transmission unit 1530 is further configured to:
store the plurality of candidate compressed texture resources and the target application texture resource; and
acquire the target application texture resource stored if the target compression format does not belong to the plurality of candidate compression formats, and transmit the target application texture resource to the second electronic device.

The specific implementation of the application texture resource rendering apparatus is substantially the same as the specific embodiments of the application texture rendering method, and thus will not be described redundantly here.

FIG. 16 is a schematic structural diagram of an application texture rendering apparatus 1600 applied to a second electronic device according to an embodiment of this application. The application texture rendering apparatus 1600 specifically includes:
a determination unit 1610 configured to determine a target compression format supported by a second electronic device in response to acquiring placeholder data of a target application transmitted from a first electronic device;
a third transmission unit 1620 configured to transmit a resource request to the first electronic device, the resource request being configured for requesting a target compressed texture resource, and the target compressed texture resource being obtained by compressing a target application texture resource in the target compression format; and
a first receiving unit 1630 configured to receive the target compressed texture resource from the first electronic device, and render the target application based on the target compressed texture resource; where when transmitting the placeholder data of the target application, the first electronic device further compresses the acquired target application texture resource into a plurality of candidate compressed texture resources according to a plurality of candidate compression formats, respectively; the plurality of candidate compression formats include the target compression format; and the plurality of candidate compressed texture resources include the target compressed texture resource.

In an embodiment, the placeholder data is present in an application package; and the determination unit 1610 is configured to run the application package via main logic, and query via a texture processing script to obtain the target compression format supported by the second electronic device in response to identifying that the application package contains the placeholder data during running.

In an embodiment, the determination unit 1610 is further configured to:
run the application package via the main logic, and add a mandatory constraint to the texture processing script in response to identifying that the application package contains the placeholder data during running and a texture resource compression format field in the application package being an anchor compression format, the mandatory constraint indicating support for the anchor compression format; and
transmit a query request to the texture processing script; where the query request is configured for the texture processing script to verify the support for the anchor compression format based on the mandatory constraint and query to obtain the target compression format other than the anchor compression format supported by the second electronic device.

In an embodiment, the third transmission unit 1620 is configured to:
insert a hook statement before a rendering function configured for rendering the target application; and
execute the hook statement, the hook statement being configured for replacing the placeholder data in the application package with the target compression format, and transmit the resource request to the first electronic device based on the target compression format in the application package.

In an embodiment, the first receiving unit 1630 is configured to:
store the target compressed texture resource in a target storage space, and transmit the target compressed texture resource to a rendering processing unit; and
delete the target compressed texture resource from the target storage space after receiving a message indicating successful rendering by the rendering processing unit based on the target compressed texture resource.

The specific implementation of the application texture resource rendering apparatus is substantially the same as the specific embodiments of the application texture rendering method, and thus will not be described redundantly here.

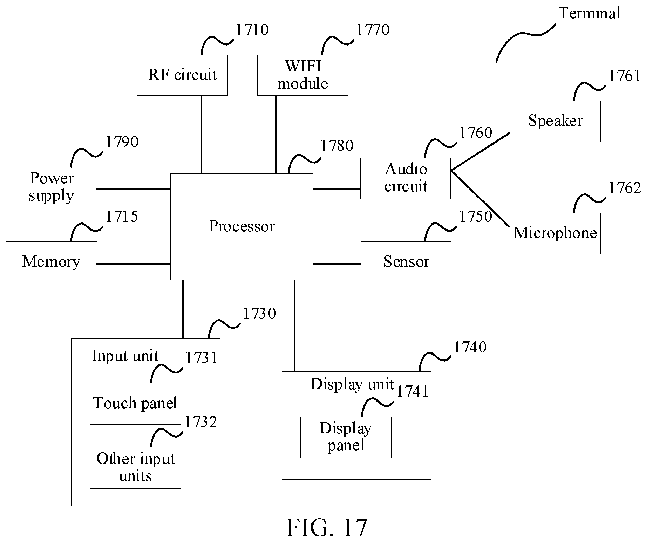

FIG. 17 is a structural block diagram of part of a second electronic device to which an application texture rendering method is applied according to an embodiment of this application. The second electronic device may be a terminal, including components such as a radio frequency (RF) circuit 1710, a memory 1715, an input unit 1730, a display unit 1740, a sensor 1750, an audio circuit 1760, a wireless fidelity (WiFi) module 1770, a processor 1780, and a power supply 1790. A person skilled in the art may understand that the structure of the electronic device shown in FIG. 17 does not constitute a limitation on a mobile phone or a computer. More or less components than those shown in the figure may be included, or some components may be combined, or different component arrangements may be provided.

The RF circuit 1710 may be configured to receive and transmit a signal during information reception and transmission or calling, and particularly, after receiving downlink information from a base station, transmit the information to the processor 1780 for processing. In addition, the related uplink data is transmitted to the base station.

The memory 1715 may be configured to store a software program and a module, and the processor 1780 is configured to run the software program and the module stored in the memory 1715, to implement various functional applications and data processing of a content terminal.

The input unit 1730 may be configured to receive input digit or character information, and generate key signal inputs related to the setting and functional control of the content terminal. The input unit 1730 may include a touch panel 1731 and other input units 1732.

The display unit 1740 may be configured to display inputted information or provided information, and various menus of the content terminal. The display unit 1740 may include a display panel 1741.

The audio circuit 1760, a speaker 1761, and a microphone 1762 may provide an audio interface.

In this embodiment of this application, the processor 1780 included in the terminal may perform the application texture rendering method in the foregoing embodiments.

In this embodiment of this application, the terminal includes, but is not limited to, a mobile phone, a computer, an intelligent voice interaction device, a smart home appliance, an in-vehicle terminal, an aircraft, and the like. The embodiments of this application may be applied to various scenarios, including but not limited to a content distribution scenario, a game scenario, resource processing, and the like.

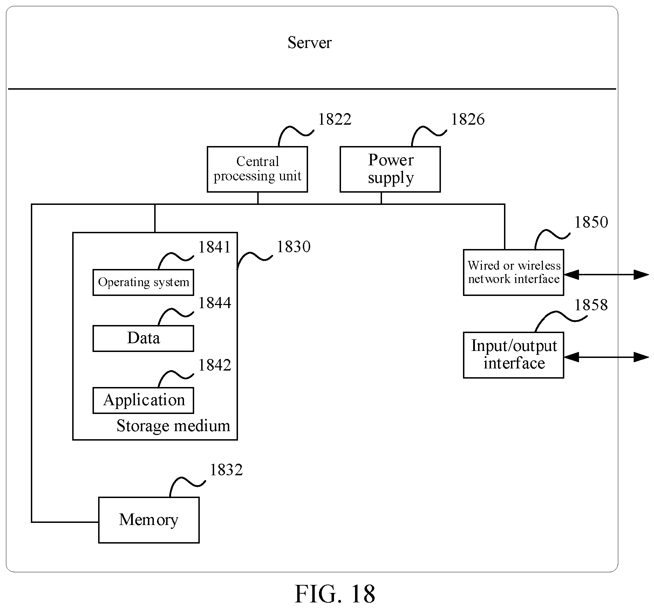

FIG. 18 is a structural block diagram of part of a first electronic device to which an application texture rendering method is applied according to an embodiment of this application. The first electronic device such as a server may vary greatly because of different configurations or performance, and may include one or more Central Processing Units (CPUs) 1822 (for example, one or more processors), a memory 1832, and one or more storage media 1830 (for example, one or more mass storage apparatuses) that store an application 1842 or data 1844. The memory 1832 and the storage medium 1830 may be transitory or persistent storage. A program stored in the storage medium 1830 may include one or more modules (not shown in the figure), and each of the modules may include a series of instruction operations on the server. Still further, the CPU 1822 may be configured to communicate with the storage medium 1830, and perform, on the server, the series of instruction operations in the storage medium 1830.

The server may further include one or more power supplies 1826, one or more wired or wireless network interfaces 1850, one or more input/output interfaces 1858, and/or one or more operating systems 1841, such as Windows ServerTM, Mac OS XTM, UnixTM, LinuxTM, and FreeBSDTM.

The CPU 1822 in the server may be configured to perform the application texture rendering method in the embodiments of this application.

An embodiment of this application provides a computer-readable storage medium, having computer-executable instructions stored therein that, when executed by a processor, cause the processor to perform the application texture rendering method provided in the embodiments of this application.

An embodiment of this application provides a computer program product, including computer-executable instructions stored in a computer-readable storage medium. A processor of an electronic device reads the computer-executable instructions from the computer-readable storage medium, and executes the computer-executable instructions to cause a computer device to perform the application texture rendering method described above.

The terms "first", "second", "third", "fourth", and the like (if exists) in the specification of this application and the foregoing accompanying drawings are configured for distinguishing between similar contents, and do not need to be configured for describing a particular sequence or order. The data used in such a way may be exchanged under proper conditions to make it possible to implement the described embodiments of this application in other sequences apart from those illustrated or described here. In addition, the terms "include", "comprise", and any other variants are intended to cover the non-exclusive inclusion. For example, a process, method, system, product, or apparatus that includes a series of steps or units is not necessarily limited to those expressly listed steps or units, but may include other steps or units not expressly listed or inherent to such a process, method, product, or apparatus.

In the embodiments of this application, "at least one" indicates one or more, and "a plurality of" indicates two or more. "And/or" is configured for describing an association relationship between associated content, and indicates that three relationships may exist. For example, "A and/or B" may indicate the following three cases: only A exists, only B exists, and both A and B exist. A and B may be singular or plural. The character "/" usually indicates an "or" relationship between the associated content. The phrase "at least one of the following items" or a similar expression thereof refers to any combination of these items, including a single item or any combination of plural items. For example, "at least one of a, b, or c" may represent: a, b, c, "a and b", "a and c", "b and c", or "a and b and c", where a, b, and c may each be a single or plural item.

In the descriptions of the embodiments of this application, the term "a plurality of" indicates two or more, the terms "greater than", "less than", "exceed", etc. are interpreted as excluding the present number, and the terms "above", "below", "within", etc. are interpreted as including the present number.

In several embodiments provided herein, the disclosed system, apparatus, and method may be implemented in other manners. For example, the apparatus embodiment described above is merely illustrative. For example, the unit division is merely logical function division and there may be other division during actual implementation. For example, a plurality of units or components may be combined or integrated into another system, or some features may be ignored or not performed. The displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate. Parts shown as units may or may not be physical units, which may be located in one position, or may be distributed on a plurality of network units. Some or all of the units may be selected according to actual needs to achieve the objectives of the solutions of the examples.

In addition, functional units in the embodiments of this application may be integrated into one processing unit, or each of the units may exist alone physically, or two or more units are integrated into one unit. The above integrated unit may be implemented either in the form of hardware or in the form of software functional units.

The integrated unit, if implemented in the form of a software functional unit and sold or used as a stand-alone product, may be stored in a computer-readable storage medium. Based on such an understanding, the technical solutions of this application essentially, or the part contributing to the related art, or all or some of the technical solutions may be implemented in a form of a software product. The computer software product is stored in a storage medium and includes several instructions for indicating a computer apparatus (which may be a personal computer, a server 130, or a network apparatus) to perform all or some of the operations of the methods described in the embodiments of this application. The storage medium includes any medium capable of storing program code, such as a USB flash disk, a mobile hard disk, a read-only memory (ROM), a random access memory (RAM), a magnetic disk, or an optical disk.

Various implementations according to the embodiments of this application can be combined in different manners to form other embodiments, so as to achieve different technical effects.

The above is a specific description of the implementations of the embodiments of this application, but the embodiments of this application are not limited to the above implementations. Those skilled in the art may make various equivalent modifications or replacements without going beyond the spirit of this application. These equivalent modifications or replacements are all included within the scope as defined by the claims of this application.

## Claims

1. An application texture rendering method, performed by a first electronic device and comprising:
acquiring a first application texture resource and placeholder data of a first application, and transmitting the placeholder data to a second electronic device;
compressing the first application texture resource into a plurality of candidate compressed texture resources based on a plurality of candidate compression formats;
receiving a resource request transmitted by the second electronic device, the resource request being transmitted by the second electronic device after acquiring the placeholder data and being configured for requesting a first compressed texture resource, and the first compressed texture resource corresponding to a compressing result of the first application texture resource using a first compression format; and
acquiring the first compressed texture resource from the plurality of candidate compressed texture resources if the first compression format belongs to the plurality of candidate compression formats, in order to transmit the first compressed texture resource to the second electronic device;
wherein the first compressed texture resource is configured for the second electronic device to render the first application.

2. The application texture rendering method according to claim 1, wherein acquiring the first application texture resource of the first application comprises:
acquiring an initial resource package of the first application, the initial resource package comprising an initial compressed texture resource in an initial compression format for the first application; and
decompressing the initial compressed texture resource to obtain the first application texture resource.

3. The application texture rendering method according to claim 2, wherein the initial resource package further comprises an initial compression format name; and
decompressing the initial compressed texture resource to obtain the first application texture resource comprises:
acquiring an initial compression algorithm corresponding to the initial compression format name; and
decompressing the initial compressed texture resource into the first application texture resource based on the initial compression algorithm.

4. The application texture rendering method according to any one of claims 1 to 3, further comprising: before transmitting the placeholder data to the second electronic device,
acquiring an initial resource package of the first application, the initial resource package comprising an initial compressed texture resource of the first application; and
replacing the initial compressed texture resource in the initial resource package with the placeholder data to obtain an updated resource package; and
transmitting the placeholder data to the second electronic device comprises:
transmitting the updated resource package to the second electronic device.

5. The application texture rendering method according to claim 4, further comprising: before transmitting the updated resource package to the second electronic device,
changing a texture resource compression format field of the updated resource package to an anchor compression format to obtain a first updated resource package; and
transmitting the updated resource package to the second electronic device comprises:
transmitting the first updated resource package to the second electronic device;
wherein the second electronic device adds a mandatory constraint to a texture processing script when identifying that the texture resource compression format field is the anchor compression format, the mandatory constraint indicating support for the anchor compression format.

6. The application texture rendering method according to any one of claims 1 to 5, wherein the placeholder data is a texture resource name, and the resource request comprises the texture resource name and the first compression format; and
the application texture rendering method further comprises: after compressing the first application texture resource into the plurality of candidate compressed texture resources based on the plurality of candidate compression formats,
for each candidate compression format, storing the candidate compressed texture resource based on a candidate storage address corresponding to the texture resource name and the candidate compression format; and
acquiring the first compressed texture resource from the plurality of candidate compressed texture resources if the first compression format belongs to the plurality of candidate compression formats comprises:
acquiring the first compressed texture resource based on a first storage address corresponding to the texture resource name and the first compression format if the first compression format belongs to the plurality of candidate compression formats, wherein the first storage address belongs to a plurality of candidate storage addresses.

7. The application texture rendering method according to claim 6, wherein storing the candidate compressed texture resource based on the candidate storage address corresponding to the texture resource name and the candidate compression format comprises:
performing a first operation on the texture resource name and the candidate compression format to obtain the candidate storage address; and
storing the candidate compressed texture resource based on the candidate storage address; and
the application texture rendering method further comprises: before acquiring the first compressed texture resource based on the first storage address corresponding to the texture resource name and the first compression format,
if the first compression format belongs to the plurality of candidate compression formats, performing the first operation on the texture resource name and the first compression format to obtain the first storage address.

8. The application texture rendering method according to claim 6, wherein storing the candidate compressed texture resource based on the candidate storage address corresponding to the texture resource name and the candidate compression format comprises:
acquiring a first correspondence table, the first correspondence table indicating a correspondence among the texture resource name, the candidate compression format, and the candidate storage address; and
storing the candidate compressed texture resource based on the first correspondence table; and
the application texture rendering method further comprises: before acquiring the first compressed texture resource based on the first storage address corresponding to the texture resource name and the first compression format,
if the first compression format belongs to the plurality of candidate compression formats, looking up the first correspondence table based on the texture resource name and the first compression format to obtain the first storage address.

9. The application texture rendering method according to any one of claims 1 to 5, wherein the placeholder data is a texture resource name; the resource request comprises a first storage address that is determined by the second electronic device based on the texture resource name and the first compression format; and
the application texture rendering method further comprises: after compressing the first application texture resource into the plurality of candidate compressed texture resources based on the plurality of candidate compression formats,
for each candidate compression format, storing the candidate compressed texture resource based on a candidate storage address corresponding to the texture resource name and the candidate compression format; and
acquiring the first compressed texture resource from the plurality of candidate compressed texture resources if the first compression format belongs to the plurality of candidate compression formats comprises:
acquiring the first compressed texture resource based on the first storage address in the resource request if the first compression format belongs to the plurality of candidate compression formats, wherein the first storage address belongs to a plurality of candidate storage addresses.

10. The application texture rendering method according to any one of claims 6 to 9, wherein acquiring the first compressed texture resource based on the first storage address comprises:
if a plurality of first compression formats exist, acquiring a compression loss rate for each first compression format;
selecting, from first storage addresses corresponding to the first compression formats based on compression loss rates of the first compression formats, a first storage address corresponding to a first compression format with a minimum compression loss rate; and
acquiring the first compressed texture resource based on the selected first storage address.

11. The application texture rendering method according to any one of claims 6 to 9, wherein acquiring the first compressed texture resource based on the first storage address comprises:
if a plurality of first compression formats exist, acquiring a compression rate for each first compression format;
selecting, from first storage addresses corresponding to the first compression formats based on compression rates of the first compression formats, a first storage address corresponding to a first compression format with a maximum compression rate; and
acquiring the first compressed texture resource based on the selected first storage address.

12. The application texture rendering method according to any one of claims 1 to 11, further comprising: after compressing the first application texture resource into the plurality of candidate compressed texture resources based on the plurality of candidate compression formats,
storing the plurality of candidate compressed texture resources and the first application texture resource; and
acquiring the first application texture resource stored if the first compression format does not belong to the plurality of candidate compression formats, and transmitting the first application texture resource to the second electronic device.

13. An application texture rendering method, performed by a second electronic device and comprising:
determining a first compression format supported by the second electronic device in response to acquiring placeholder data of a first application transmitted from a first electronic device;
transmitting a resource request to the first electronic device, the resource request being configured for requesting a first compressed texture resource, and the first compressed texture resource corresponding to a compressing result of a first application texture resource using the first compression format; and
receiving the first compressed texture resource from the first electronic device, and rendering the first application based on the first compressed texture resource;
wherein when transmitting the placeholder data of the first application, the first electronic device further compresses the acquired first application texture resource into a plurality of candidate compressed texture resources based on a plurality of candidate compression formats; the plurality of candidate compression formats comprise the first compression format; and the plurality of candidate compressed texture resources comprise the first compressed texture resource.

14. The application texture rendering method according to claim 13, wherein the placeholder data is present in an application package; and
determining the first compression format supported by the second electronic device in response to acquiring placeholder data of the first application transmitted from the first electronic device comprises:
running the application package via main logic, and querying via a texture processing script to obtain the first compression format supported by the second electronic device in response to identifying that the application package contains the placeholder data during running.

15. The application texture rendering method according to claim 14, wherein running the application package via the main logic, and querying via the texture processing script to obtain the first compression format supported by the second electronic device in response to identifying that the application package contains the placeholder data during running comprises:
running the application package via the main logic, and adding a mandatory constraint to the texture processing script in response to identifying that the application package contains the placeholder data during running and a texture resource compression format field in the application package being an anchor compression format, the mandatory constraint indicating support for the anchor compression format; and
transmitting a query request to the texture processing script; wherein the query request is configured for the texture processing script to verify the support for the anchor compression format based on the mandatory constraint and query to obtain the first compression format, other than the anchor compression format, supported by the second electronic device.

16. The application texture rendering method according to any one of claims 13 to 15, wherein transmitting the resource request to the first electronic device comprises:
inserting a hook statement before a rendering function configured for rendering the first application; and
executing the hook statement, the hook statement being configured for replacing the placeholder data in the application package with the first compression format, and transmitting the resource request to the first electronic device based on the first compression format in the application package.

17. The application texture rendering method according to any one of claims 13 to 16, wherein rendering the first application based on the first compressed texture resource comprises:
storing the first compressed texture resource in a first storage space, and transmitting the first compressed texture resource to a rendering processing unit; and
deleting the first compressed texture resource from the first storage space after receiving a message indicating successful rendering by the rendering processing unit based on the first compressed texture resource.

18. An application texture rendering apparatus, comprising:
a first transmission unit configured to acquire a first application texture resource and placeholder data of a first application, and transmit the placeholder data to a second electronic device;
a compression unit configured to compress the first application texture resource into a plurality of candidate compressed texture resources based on a plurality of candidate compression formats, respectively; and
a second transmission unit configured to: receive a resource request transmitted by the second electronic device, the resource request being transmitted by the second electronic device after acquiring the placeholder data and being configured for requesting a first compressed texture resource, and the first compressed texture resource corresponding to a compressing result of the first application texture resource using a first compression format; and acquire the first compressed texture resource from the plurality of candidate compressed texture resources if the first compression format belongs to the plurality of candidate compression formats, in order to transmit the first compressed texture resource to the second electronic device; wherein the first compressed texture resource is configured for the second electronic device to render the first application.

19. An application texture rendering apparatus, comprising:
a determination unit configured to determine a first compression format supported by a second electronic device in response to acquiring placeholder data of a first application transmitted from a first electronic device;
a third transmission unit configured to transmit a resource request to the first electronic device, the resource request being configured for requesting a first compressed texture resource, and the first compressed texture resource corresponding to a compressing result of a first application texture resource using the first compression format; and
a first receiving unit configured to receive the first compressed texture resource from the first electronic device, and render the first application based on the first compressed texture resource; wherein when transmitting the placeholder data of the first application, the first electronic device further compresses the acquired first application texture resource into a plurality of candidate compressed texture resources based on a plurality of candidate compression formats; the plurality of candidate compression formats comprise the first compression format; and the plurality of candidate compressed texture resources comprise the first compressed texture resource.

20. An electronic device, comprising:
a memory configured to store computer-executable instructions or a computer program; and
a processor configured to execute the computer-executable instructions or the computer program stored in the memory to implement the application texture rendering method according to any one of claims 1 to 17.

21. A computer-readable storage medium, having computer-executable instructions or a computer program stored therein that, when executed by a processor, cause(s) the application texture rendering method according to any one of claims 1 to 17 to be implemented.

22. A computer program product, comprising computer-executable instructions or a computer program stored therein that, when executed by a processor, cause(s) the application texture rendering method according to any one of claims 1 to 17 to be implemented.
